# EUROPEAN PATENT SPECIFICATION

(11) **EP 3 861 585 B1**
(45) Date of publication and mention of the grant of the patent: **06.05.2026**
(21) Application number: 19794776.5
(22) Date of filing: 01.10.2019
(51) Int. Cl.: H01M 10/052, H01M 10/0562, H01M 50/46

(54) **METHODS OF MAKING AND USING AN ELECTROCHEMICAL CELL COMPRISING AN INTERLAYER**
VERFAHREN ZUR HERSTELLUNG AND ZUR NUZUNG EEINER ELEKTROCHEMISCHEN ZELLE, DIE EINE ZWISCHENSCHICHT ENTHÄLT
MÉTHODES DE PRODUCTION ET D'UTILISATION UNE CELLULE ÉLECTROCHIMIQUE COMPRENANT UNE COUCHE INTERMÉDIAIRE

(30) Priority: 02.10.2018 US 201862740332 P
(43) Date of publication of application: 11.08.2021
(73) Proprietor: QuantumScape Battery, Inc., San Jose, CA 95110 (US)
(72) Inventor: BECK, Larry, San Jose, California 95110 (US); CHAO, Cheng-Chieh, San Jose, California 95110 (US); DONNELLY, Niall, San Jose, California 95110 (US); HOLME, Tim, San Jose, California 95110 (US); LI, Shuang, San Jose, California 95110 (US); VAN BERKEL, Kim, San Jose, California 95110 (US); GENDRON, Danielle, San Jose, California 95110 (US); SMITH, Shawna, San Jose, California 95110 (US); SUGANO, Karen, San Jose, California 95110 (US); YAW, Clarissa, San Jose, California 95110 (US)
(74) Representative: Murgitroyd & Company
(86) International application number: PCT/US2019/054117
(87) International publication number: WO 2020/072524

(56) References cited:
- US-A1- 2006 222 954
- US-A1- 2016 380 315
- US-A1- 2017 279 155
- US-B1- 6 733 924

## Description

### CROSS-REFERENCE TO RELATED APPLICATIONS

This application claims priority to, and the benefit of, US Provisional Patent Application No. 62/740,332, which was filed October 2, 2018.

### FIELD

The present disclosure concerns solid-state electrochemical cells and rechargeable batteries containing the same.

### BACKGROUND

In a rechargeable Li⁺ ion battery, Li⁺ ions move from a negative electrode to a positive electrode during discharge and in the opposite direction during charge. This process produces electrical energy (Energy = Voltage x Current) in a circuit connecting the electrodes, which is electrically isolated from, but parallel to, the Li⁺ ion conduction path. The battery's voltage (V versus Li) is a function of the chemical potential difference for Li situated in the positive electrode as compared to Li situated in the negative electrode and is maximized when Li metal is used as the negative electrode. An electrolyte physically separates and electrically insulates the positive and negative electrodes while also providing a conduction medium for Li⁺ ions. The electrolyte ensures that when Li metal oxidizes at the negative electrode during discharge (*e.g*., Li ↔ Li⁺ + e⁻) and produces electrons, these electrons conduct between the electrodes by way of an external circuit which is not the same pathway taken by the Li⁺ ions. Example battery technology is disclosed in US 2017/279155 A1 which discusses a battery, comprising an interlayer located between a negative electrode current collector and a solid-state electrolyte separator. US 6733924 B1 discloses a lithium anode of an electrochemical cell, with a first layer of lithium metal and a second layer of a temporary protective material capable of forming an alloy with the lithium metal or diffusing into it. US 2006/222954 A1 discloses another example of an anode for use in electrochemical cells wherein the anode active layer has a first layer of lithium metal and a multi-layer structure comprising single ion conducting layers and polymer layers. US 2016/380315 A1 discloses an electrochemical cell, comprising an anode and an electrolyte separator with an interlayer in between.

When the positive electrode, electrolyte, and negative electrode are made of solid materials, or substantially made of solid materials, the resulting rechargeable battery is referred to as a solid-state rechargeable battery. In a battery having a solid-state electrolyte separator and a lithium metal negative electrode, the separator-lithium metal interface requires sufficient contact to locally flow lithium metal, while plating (*i.e.,* charging) and stripping (*i.e.,* discharging), into and out of the separator. Repeated expansion and contraction during cell cycling can lead to delamination of the negative electrode from the solid-state separator. Accordingly, there is a need for improved methods for retaining contact between a lithium metal anode and a solid state separator in electrochemical cells.

### SUMMARY

According to a first aspect of the present concept there is provided a lithium battery comprising: a negative electrode current collector (NECC); a solid-state electrolyte separator; and an interlayer between the NECC and the electrolyte separator; wherein the interlayer comprises zinc (Zn) having a thickness of between 300-699 nm; or tin (Sn) having a thickness of 300-350 nm or 350-399 nm.

Optionally, the electrolyte separator of the lithium battery is a thin film or a pellet.

Optionally, the interlayer of the lithium battery further comprises an oxygen-containing compound.

Optionally the lithium battery further comprises a Li metal negative electrode between and in direct contact with the NECC and the interlayer, wherein the interlayer is between and in direct contact with the lithium metal negative electrode and the electrolyte separator.

Optionally the electrolyte separator of the lithium battery comprises lithium-stuffed garnet.

Optionally, the lithium-stuffed garnet of the lithium battery comprises Li_{A}La_{B}M'_{C}M"_{D}Zr_{E}O_{F}, wherein 4<A<8.5, 1.5<B<4, 0≤C≤2, 0≤D≤2; 0≤E≤2.5, 10<F≤13; and M' and M" are each, independently in each instance selected, from the group consisting of Al, Mo, W, Nb, Sb, Ca, Ba, Sr, Ce, Hf, Rb, Ga, and Ta; wherein the lithium-stuffed garnet comprises Li_{J}La_{K}Zr_{L}O_{M}·yAl₂O₃; wherein 5≤J≤8, 2≤K≤5, 0≤L≤3, 10≤M≤13, and 0≤y≤1; or wherein the lithium-stuffed garnet comprises LiₓLa₃Zr_{z}O_{12·}yAl₂O₃, wherein 5≤x≤8, 0≤y≤1, and 0<z≤2.5.

Optionally, the interlayer and the lithium metal negative electrode of the lithium battery comprise 99.9%-95% lithium by mole and 0.1% - 5% zinc by mole; or wherein the interlayer further comprises at least one member selected from the group consisting of Al, Au, Ag, Bi, Cr, Ge, Sb, Si, Ti, a lithium alloy thereof, oxides thereof, hydroxides thereof, peroxides thereof, and combinations thereof.

Optionally, the interlayer of the lithium battery decreases the contact angle of liquid lithium metal, when liquid lithium metal is placed in contact with the interlayer compared to when liquid lithium metal is placed in contact with the electrolyte separator.

Optionally, the NECC of the lithium battery comprises a material selected from the group consisting of carbon (C)-coated nickel (Ni), nickel (Ni), copper (Cu), aluminum (Al), stainless steel, and combinations thereof.

Optionally, the electrolyte separator of the lithium battery is a thin film and the thickness of the thin film is from 0.1 µm to 200 µm.

Optionally, the interlayer of the lithium battery comprises zinc (Zn) having a thickness of between 300-699 nm. Optionally, the interlayer of the lithium battery comprises tin (Sn) having a thickness 300-350nm or 350-399 nm. According to a further aspect of the present concept there is provided an electrochemical cell comprising a lithium battery, wherein a pressure in the electrochemical cell is at least 68.9 kPa (10 psi).

Optionally wherein a pressure in the electrochemical cell is at least 689 kPa (100 psi); or wherein a pressure in the electrochemical cell is lower than 2068 kPa (300 psi).

### BRIEF DESCRIPTIONS OF THE DRAWINGS

FIG. 1 shows a schematic of a test cell **(100).** From top to bottom, the top layer is Li metal **(101),** the next layer is the interfacial layer comprising a LiZn alloy **(102),** the next layer is a solid state electrolyte **(103,** *e.g.,* lithium stuffed garnet), and the last layer is evaporated lithium as a bottom electrode **(104).** The schematic is not drawn to scale.
FIG. 2 shows a plot of the test cell voltage v. time for two electrochemical cells (control and cell 1) as described in Example 1.
FIG. 3 shows the amount of Li stripped from the top electrode without external pressure at 45 °C and 1 mA/cm² current density for two electrochemical cells (control and cell 1) as described in Example 1.
FIG. 4 shows a plot of voltage v. time for two electrochemical cells (control and cell 1) as described in Example 1.
FIG. 5 shows a plot of voltage v. time for lithium plating in a cell comprising evaporated zinc as an interlayer as described in Example 3.
FIG. 6 shows contact angles of molten lithium with different metal samples as described in Example 4.
FIGs. 7A-7C illustrate the assembly and cycling behavior of an interlayer that has been deposited on an electrolyte separator.
FIGs. 8A-8C illustrate the assembly and cycling behavior of an interlayer that has been deposited on a negative electrode current collector.
FIGs. 9A-9B illustrate the behavior of a seed layer after multiple cycles.
FIG. 10 shows full cell data (normalized discharge capacity v. Cumulative Cycle Index) for a cell that comprises a zinc interlayer as set forth in Example 5. The cell was made via deposition of a zinc interlayer on an electrolyte separator.
FIG. 11 shows full cell data (Normalized Discharge Capacity v. Cumulative Cycle Index) for a cell that comprises a zinc interlayer as set forth in Example 6. The cell was made via deposition of a zinc interlayer on a negative electrode current collector.
FIG. 12 shows full cell data (Normalized Discharge Capacity v. Cumulative Cycle Index) for a cell that comprises an aluminum interlayer as set forth in Example 7. The cell was made via deposition of an aluminum interlayer on an electrolyte separator.
FIG. 13 shows full cell data (Normalized Discharge Capacity v. Cumulative Cycle Index) for a cell that comprises an aluminum interlayer as set forth in Example 8. The cell was made via deposition of an aluminum interlayer on a negative electrode current collector.
FIG. 14 shows the survival rate of full cells comprising evaporated tin on solid-state separators.
FIG. 15 shows the prevalence of rapid capacity fade over the cycle life of cells comprising evaporated zinc on solid-state separators.
FIG. 16 shows the survival rate of full cells comprising evaporated aluminum on solid-state separators at cycle 200 and cycle 350.
FIG. 17 illustrates the effect of total impedance on an asymmetric architecture comprising a layer of lithium, a solid-state separator pellet, an interlayer of bismuth, and a layer of lithium.

### DETAILED DESCRIPTION

### A. GENERAL

There are a series of challenges related to using lithium metal negative electrodes in rechargeable batteries. One challenge is that during a discharge, lithium may not deform fast enough to maintain an intimate contact with the solid-state separator. The ionic resistance (*i.e.,* impedance) in the lithium battery can increase if gaps and/or cavities build up or are created between the lithium metal anode (*i.e.,* negative electrode), and a solid-state electrolyte that is in contact therewith, or if there is a decrease in the surface area of the lithium metal which is in contact with the solid-state electrolyte. High pressure may be needed to prevent delamination of the lithium metal negative electrode and the oxide separator in order to mitigate the loss of contact between lithium metal negative electrode and the separator. However, high pressure increases the cost and volume requirements of a battery and may reduce the overall energy density and reliability.

Provided herein are electrode stacks and/or electrochemical cells, that reduce delamination (*i.e.,* a decrease in the active surface area of the lithium metal, which is the surface area of the lithium metal which physically contacts the solid-state electrolyte) during cell cycling. The devices and methods described herein comprise an interlayer between a lithium metal negative electrode and/or negative electrode current collector and the oxide separator, as described herein, and reduce or eliminate the need for high pressure to maintain lamination.

### B. DEFINITIONS

As used herein, the term "about," when qualifying a number, *e.g*., about 15 % w/w, refers to the number qualified and optionally the numbers included in a range about that qualified number that includes ± 10% of the number. For example, about 15 % w/w includes 15 % w/w as well as 13.5 % w/w, 14 % w/w, 14.5 % w/w, 15.5 % w/w, 16 % w/w, or 16.5 % w/w. For example, "about 75 °C," includes 75 °C as well 68 °C, 69 °C, 70 °C, 71 °C, 72 °C, 73 °C, 74 °C, 75 °C, 76 °C, 77 °C, 78 °C, 79 °C, 80 °C, 81 °C, 82 °C, or 83 °C.

As used herein, "selected from the group consisting of" refers to a single member from the group, more than one member from the group, or a combination of members from the group.

A member selected from the group consisting of A, B, and C includes, for example, A only, B only, or C only, as well as A and B, A and C, B and C, as well as A, B, and C.

As used herein, the term "interlayer," refers to a layer of material provided or positioned between the solid-state separator and the negative electrode current collector (NECC) and/or the Li metal negative electrode. In an embodiment, if all of lithium metal is stripped from the negative electrode, *i.e.,* the electrochemical cell is fully discharged, the interlayer is in direct contact with the NECC. In an embodiment, when the electrochemical cell is fully charged or partially charged or partially discharged, a portion of the interlayer is in contact with the negative electrode. The interlayer comprises one or more metals and/or alloys thereof, and oxides, hydroxides and/or peroxides thereof, and any combinations thereof. The interlayer provides a layer that conducts lithium ions to or from the negative electrode through or from the interlayer and into the solid electrolyte separator. In some instances, an interlayer is referred to as a seed layer.

As used herein, the phrases "electrochemical cell" or "battery cell" shall mean a single cell including a positive electrode and a negative electrode, which have ionic communication between the two by way of an electrolyte. Unless specific to the contrary, the electrolyte is a solid-state electrolyte. In some examples, the electrolyte includes a solid-state electrolyte in addition to a liquid electrolyte and/or a gel electrolyte. In some embodiments, the same battery cell includes multiple positive electrodes and/or multiple negative electrodes enclosed in one container.

As used herein, the phrase "direct contact," means that two materials are in sufficient physical contact to conduct an electronic or ionic current, if the materials are electrically or ionically conductive. Direct contact between two materials, one of which is electrically or ionically insulating, means that the two materials share an interface that transmits an applied force or pressure.

As used herein, the term "contact" means direct contact unless specified otherwise. For electrically conductive materials, contact means contact sufficient for electrical conduction to occur between the contacting materials. For ionically conductive materials, contact means contact sufficient for ionic conduction to occur between the contacting materials. Two materials which are in direct contact are positioned without an interleaving layer between the two materials.

As used herein, the phrase "electrochemical device" refers to an energy storage device, such as, but not limited to a Li-secondary battery that operates or produces electricity or an electrical current by an electrochemical reaction, *e.g.,* a conversion chemistry reaction such as 3Li + FeF₃ ↔ 3LiF + Fe. Electrochemical devices include those devices that operate or produce electricity or an electrical current by an intercalation chemistry electrochemical reaction, such as but not limited to the Li intercalation reactions that occur with cathode active materials, such as but not limited to cobalt oxide, nickel-cobalt-aluminum oxide (NCA), nickel-manganese-cobalt oxide (NMC), lithium iron phosphate (LFP), and lithium titanate (LTO) cathode active materials.

As used herein the phrase "energy storage electrode," refers to, for example, an electrode that is suitable for use in an energy storage device, *e.g.,* a lithium rechargeable battery or Li-secondary battery. As used herein, such an electrode is capable of conducting electrons and Li ions as necessary for the charging and discharging of a rechargeable battery.

As used herein the term "making," refers to the process or method of forming or causing to form the object that is made. For example, making an energy storage electrode includes the process, process steps, or method of causing the electrode of an energy storage device to be formed. The end result of the steps constituting the making of the energy storage electrode is the production of a material that is functional as an electrode for reversibly charging and discharging Li⁺ ions.

As used herein, the phrase "providing" refers to the provision of, generation of, presentation of, or delivery of that which is provided.

As used herein, the terms "electrode stack," or "electrochemical stack" refer to at least a positive electrode, a negative electrode, and a solid-state electrolyte positioned between the positive and negative electrodes. In some examples, a stack includes a series of repeating layers of positive electrodes, solid separators, and negative electrodes.

As used herein, the terms "cathode" and "anode" refer to the electrodes of a battery. During a charge cycle in a Li-secondary battery, Li ions leave the cathode and move through an electrolyte and to the anode. During a charge cycle, electrons leave the cathode and move through an external circuit to the anode. During a discharge cycle in a Li-secondary battery, Li ions migrate towards the cathode through an electrolyte and from the anode. During a discharge cycle, electrons leave the anode and move through an external circuit to the cathode.

As used herein, the term "negative electrode," refers to a lithium metal negative electrode unless specified otherwise to the contrary.

As used herein, the term "a positive electrode," refers to the portion of an electrochemical cell to which ions and electrons flow during discharge of the electrochemical cell.

As used herein, the term "electrolyte," refers to an ionically conductive and electrically insulating material. Electrolytes are useful for electrically insulating the positive and negative electrodes of a rechargeable battery while allowing for the conduction of ions, *e.g.,* Li⁺, through the electrolyte. In some of the electrochemical devices described herein, the electrolyte includes a solid-state film, pellet, or monolith of a Li⁺ conducting oxide, such as a lithium-stuffed garnet. In some examples, the electrolyte further includes a gel electrolyte which is laminated to or directly contacting the solid film, pellet, or monolith.

As used herein, "solid-state thin film or pellet separator" refers to the solid-state electrolyte which may be present as a thin film, or a pressed-powder pellet. The thin film or pellet may comprise sintered or unsintered Li⁺ conducting oxide, such as a lithium-stuffed garnet.

As used herein, the term "solid-state electrolyte," refers to an electrolyte, as defined herein, wherein the electrolyte is a solid.

As used herein, the terms "separator," and "Li⁺ ion-conducting separator," are used interchangeably with separator being a short-hand reference for Li⁺ ion-conducting separator, unless specified otherwise explicitly. A separator refers to a solid-state electrolyte which conducts Li⁺ ions, is substantially insulating to electrons, and is suitable for use as a physical barrier or spacer between the positive and negative electrodes in an electrochemical cell or a rechargeable battery. A separator, as used herein, is substantially insulating to electrons. A separator's lithium ion conductivity is at least 10³ times, and typically 10⁶ times, greater than the separator's electron conductivity.

As used herein, the term "rational number" refers to any number which can be expressed as the quotient or fraction (*e.g.,* p/q) of two integers (*e.g.,* p and q), with the denominator (*e.g.,* q) not equal to zero. Example rational numbers include, but are not limited to, 1, 1.1, 1.52, 2, 2.5, 3, 3.12, and 7.

Unless specified to the contrary, subscripts and molar coefficients in empirical formulae are based on the quantities of raw materials initially batched to make the material described. For example, for the material, Li₇La₃Zr₂O₁₂·0.35Al₂O₃, the subscripts, 7, 3, 2, 12, and the coefficient, 0.35, refer to the respective elemental ratios in the chemical precursors (e.g., LiOH, La₂O₃, ZrO₂, Al₂O₃) used to prepare the Li₇La₃Zr₂O₁₂·0.35Al₂O₃. As used herein, the ratios are molar ratios unless specified to the contrary.

As used herein, the phrases "lithium-stuffed garnet" or "Li-stuffed" refer to oxides that are characterized by a crystal structure related to a garnet crystal structure and which include Li, La, Zr, and O elements. US Patent Application Publication No. 2015/0099190, which published April 9, 2015 and was filed October 7, 2014 as 14/509,029, and provides non-limiting examples of lithium-stuffed garnets. This application describes Li-stuffed garnet electrolytes used in solid-state lithium rechargeable batteries. These Li-stuffed garnets generally have a composition according to Li_{A}La_{B}M'_{C}M"_{D}Zr_{E}O_{F}, LiₐLa_{B}M'_{C}M"_{D}Ta_{E}O_{F}, or Li_{A}La_{B}M'_{C}M"_{D}Nb_{E}O_{F}, wherein 4<A<8.5, 1.5<B<4, 0≤C≤2, 0≤D≤2; 0≤E≤2.5, 10<F<13, and M' and M" are each, independently in each instance selected from Ga, Al, Mo, W, Nb, Sb, Ca, Ba, Sr, Ce, Hf, Rb, or Ta, or LiₐLa_{b}Zr_{c}Al_{d}Me"ₑO_{f}, wherein 5<a<8.5; 2<b<4; 0<c≤2.5; 0≤d<2; 0≤e≤2, and 10<f<13 and Me" is a metal selected from Ga, Nb, Ta, V, W, Mo, or Sb and as otherwise described in U.S. Patent Application Publication No. US 2015/0099190. As used herein, lithium-stuffed garnets, and garnets, generally, include, but are not limited to, Li_{7.0}La₃(Zrₜ₁ + Nbₜ₂ + Taₜ₃)O₁₂ + 0.35Al₂O₃; wherein (t1+t2+t3 = 2) so that the La:(Zr/Nb/Ta) ratio is 3:2. Also, garnets used herein include, but are not limited to, LiₓLa₃Zr₂O_{F} + yAl₂O₃, wherein x ranges from 5.5 to 9; and y ranges from 0.05 to 1. In these examples, subscripts x and F and coefficient y are selected so that the garnet is charge neutral. In some examples x is 7 and y is 1.0. In some examples, x is 5 and y is 1.0. In some examples, x is 6 and y is 1.0. In some examples, x is 8 and y is 1.0. In some examples, x is 9 and y is 1.0. In some examples x is 7 and y is 0.35. In some examples, x is 5 and y is 0.35. In some examples, x is 6 and y is 0.35. In some examples, x is 8 and y is 0.35. In some examples, x is 9 and y is 0.35. In some examples x is 7 and y is 0.7. In some examples, x is 5 and y is 0.7. In some examples, x is 6 and y is 0.7. In some examples, x is 8 and y is 0.7. In some examples, x is 9 and y is 0.7. In some examples x is 7 and y is 0.75. In some examples, x is 5 and y is 0.75. In some examples, x is 6 and y is 0.75. In some examples, x is 8 and y is 0.75. In some examples, x is 9 and y is 0.75. In some examples, x is 7 and y is 0.8. In some examples, x is 5 and y is 0.8. In some examples, x is 6 and y is 0.8. In some examples, x is 8 and y is 0.8. In some examples, x is 9 and y is 0.8. In some examples x is 7 and y is 0.5. In some examples, x is 5 and y is 0.5. In some examples, x is 6 and y is 0.5. In some examples, x is 8 and y is 0.5. In some examples, x is 9 and y is 0.5. In some examples, x is 7 and y is 0.4. In some examples, x is 5 and y is 0.4. In some examples, x is 6 and y is 0.4. In some examples, x is 8 and y is 0.4. In some examples, x is 9 and y is 0.4. In some examples, x is 7 and y is 0.3. In some examples, x is 5 and y is 0.3. In some examples, x is 6 and y is 0.3. In some examples, x is 8 and y is 0.3. In some examples, x is 9 and y is 0.3. In some examples, x is 7 and y is 0.22. In some examples, x is 5 and y is 0.22. In some examples, x is 6 and y is 0.22. In some examples, x is 8 and y is 0.22. In some examples, x is 9 and y is 0.22. Also, garnets as used herein include, but are not limited to, LiₓLa₃Zr₂O₁₂ + yAl₂O₃. In one embodiment, the Li-stuffed garnet herein has a composition of Li₇Li₃Zr₂O₁₂. In another embodiment, the Li-stuffed garnet herein has a composition of Li₇Li₃Zr₂O₁₂·Al₂O₃. In yet another embodiment, the Li-stuffed garnet herein has a composition of Li₇Li₃Zr₂O₁₂·0.22Al₂O₃. In yet another embodiment, the Li-stuffed garnet herein has a composition of Li₇Li₃Zr₂O₁₂·0.35Al₂O₃. In certain other embodiments, the Li-stuffed garnet herein has a composition of Li₇Li₃Zr₂O₁₂·0.5Al₂O₃. In another embodiment, the Li-stuffed garnet herein has a composition of Li₇Li₃Zr₂O₁₂·0.75Al₂O₃. In another embodiment, the Li-stuffed garnet herein has a composition of Li₇₋ₓLi₃Zr₂O₁₂·Al₂O₃, wherein x is from 0 to 2.5. In yet another embodiment, the Li-stuffed garnet herein has a composition of Li₇₋ₓLi₃Zr₂O₁₂·0.22Al₂O₃, wherein x is from 0 to 2.5. In some examples, x is 0. In other examples, x is 0.1. In certain other examples, x is 0.2. In yet other examples, x is 0.3. In some other examples, x is 0.4. In yet some other examples, x is 0.5. In some examples, x is 0.6. In other examples, x is 0.7. In certain other examples, x is 0.8. In yet other examples, x is 0.9. In some other examples, x is 1.0. In yet some other examples, x is 1.1. In some examples, x is 1.2. In other examples, x is 1.3. In certain other examples, x is 1.4. In yet other examples, x is 1.5. In some other examples, x is 1.6. In yet some other examples, x is 1.7. In some examples, x is 1.8. In other examples, x is 1.9. In certain other examples, x is 2.1. In yet other examples, x is 2.2. In some other examples, x is 2.3. In yet some other examples, x is 2.4. In other examples, x is 2.5. In yet another embodiment, the Li-stuffed garnet herein has a composition of Li₇₋ₓLi₃Zr₂O₁₂·0.35Al₂O₃, wherein x is from 0 to 2.5. In certain other embodiments, the Li-stuffed garnet herein has a composition of Li₇₋ₓLi₃Zr₂O₁₂·0.5Al₂O₃, wherein x is from 0 to 2.5. In another embodiment, the Li-stuffed garnet herein has a composition of Li₇₋ₓLi₃Zr₂O₁₂·0.75Al₂O₃, wherein x is from 0 to 2.5. In some examples, x is 0. In other examples, x is 0.1. In certain other examples, x is 0.2. In yet other examples, x is 0.3. In some other examples, x is 0.4. In yet some other examples, x is 0.5. In some examples, x is 0.6. In other examples, x is 0.7. In certain other examples, x is 0.8. In yet other examples, x is 0.9. In some other examples, x is 1.0. In yet some other examples, x is 1.1. In some examples, x is 1.2. In other examples, x is 1.3. In certain other examples, x is 1.4. In yet other examples, x is 1.5. In some other examples, x is 1.6. In yet some other examples, x is 1.7. In some examples, x is 1.8. In other examples, x is 1.9. In certain other examples, x is 2.1. In yet other examples, x is 2.2. In some other examples, x is 2.3. In yet some other examples, x is 2.4. In other examples, x is 2.5.

As used herein, "garnet "or "lithium-stuffed garnet" does not include YAG-garnets (*i.e.,* yttrium aluminum garnets, or,*e.g,* Y₃Al₅O₁₂). As used herein, "garnet" does not include silicate-based garnets such as pyrope, almandine, spessartine, grossular, hessonite, or cinnamon-stone, tsavorite, uvarovite and andradite and the solid solutions pyrope-almandine-spessarite and uvarovite-grossular-andradite. Garnets herein do not include nesosilicates having the general formula X₃Y₂(SiO₄)₃ wherein X is Ca, Mg, Fe, and/or Mn; and Y is Al, Fe, and/or Cr.

As used here, the phrase "sulfide electrolyte," or "lithium sulfide" includes, but is not limited to, electrolytes referred to herein as LSS, LTS, LXPS, or LXPSO, where X is Si, Ge, Sn, As, Al, or Li-Sn-Si-P-S, or Li-As-Sn-S. In these acronyms (LSS, LTS, LXPS, or LXPSO), S refers to the element S, Si, or combinations thereof, and T refers to the element Sn. "Sulfide electrolyte" may also include LiₐP_{b}S_{c}X_{d}, LiₐB_{b}S_{c}X_{d}, LiₐSn_{b}S_{c}X_{d} or LiₐSi_{b}S_{c}X_{d} where X=F, Cl, Br, I, and 10%≤a≤50%, 10%≤b≤44%, 24%≤c≤70%, 0≤d≤18%; % are atomic %. Up to 10 at% oxygen may be present in the sulfide electrolytes, either by design or as a contaminant species.

As used herein, "SLOPS" includes, unless otherwise specified, a 60:40 molar ratio of Li₂S:SiS₂ with 0.1-10 mol. % Li₃PO₄. In some examples, "SLOPS" includes Li₁₀Si₄S₁₃ (50:50 Li₂S:SiS₂) with 0.1-10 mol. % Li₃PO₄. In some examples, "SLOPS" includes Li₂₆Si₇S₂₇ (65:35 Li₂S:SiS₂) with 0.1-10 mol. % Li₃PO₄. In some examples, "SLOPS" includes Li₄SiS₄ (67:33 Li₂S:SiS₂) with 0.1-5 mol. % Li₃PO₄. In some examples, "SLOPS" includes Li₁₄Si₃S₁₃ (70:30 Li₂S:SiS₂) with 0.1-5 mol. % Li₃PO₄. In some examples, "SLOPS" is characterized by the formula (1-x)(60:40 Li₂S:SiS₂)*(x)(Li₃PO₄), wherein x is from 0.01 to 0.99.

As used herein, "LBS-POX" refers to an electrolyte composition of Li₂S:B₂S₃:Li₃PO₄:LiX where X is a halogen (X=F, Cl, Br, I). The composition can include Li₃BS₃ or Li₅B₇S₁₃ doped with 0-30% lithium halide such as LiI and/or 0-10% Li₃PO₄.

As used here, "LSS" refers to lithium silicon sulfide which can be described as Li₂S-SiS₂, Li-SiS₂, Li-S-Si. LSS consists essentially of Li, S, and Si. LSS refers to an electrolyte material characterized by the formula LiₓSi_{y}S_{z} where 0.33≤x≤0.5, 0.1≤y≤0.2, 0.4≤z≤0.55, and it may include up to 10 atomic % oxygen. LSS also refers to an electrolyte material including Li, Si, and S. In some examples, LSS is a mixture of Li₂S and SiS₂. In some examples, the ratio of Li₂S:SiS₂ is 90:10, 85:15, 80:20, 75:25, 70:30, 2:1, 65:35, 60:40, 55:45, or 50:50 molar ratio. LSS may be doped with compounds such as LiₓPO_{y}, LiₓBO_{y}, Li₄SiO₄, Li₃MO₄, Li₃MO₃, PSₓ, and/or lithium halides such as, but not limited to, LiI, LiCl, LiF, or LiBr, wherein 0<x≤5 and 0<y≤5.

As used here, "LTS" refers to a lithium tin sulfide compound which can be described as Li₂S:SnS₂:As₂S₅, Li₂S-SnS₂, Li₂S-SnS, Li-S-Sn, and/or a catholyte consisting essentially of Li, S, and Sn. The composition may be LiₓSn_{y}S_{z} where 0.25≤x≤0.65, 0.05≤y≤0.2, and 0.25≤z≤0.65. In some examples, LTS is a mixture of Li₂S and SnS₂ in the ratio of 80:20, 75:25, 70:30, 2:1, or 1:1 molar ratio. LTS may include up to 10 atomic % oxygen. LTS may be doped with Bi, Sb, As, P, B, Al, Ge, Ga, and/or In and/or lithium halides such as, but not limited to, LiI, LiCl, LiF, or LiBr. As used herein, "LATS" refers to LTS, as used above, and further including Arsenic (As).

As used here, "LXPS" or "LPSX" refers to a material characterized by the formula LiₐMP_{b}S_{c}, where M is Si, Ge, Sn, and/or Al, and where 2 ≤ a ≤ 8, 0.5 ≤ b ≤ 2.5, 4 ≤ c ≤ 12. "LSPS" refers to an electrolyte material characterized by the formula LₐSiP_{b}S_{c}, where 2 ≤ a ≤ 8, 0.5 ≤ b ≤ 2.5, 4 ≤ c ≤ 12. LSPS refers to an electrolyte material characterized by the formula LₐSiP_{b}S_{c}, wherein, where 2≤a≤8, 0.5≤b≤4 ≤c≤12, d<3. In these examples, the subscripts are selected so that the compound is neutrally charged. Exemplary LXPS materials are found, for example, in International Patent Application Publication No. WO 2014/186634, filed May 15, 2014, and titled SOLID STATE CATHOLYTE OR ELECTROLYTE FOR BATTERY USING LI_{A}MP_{B}S_{C} (M=Si, Ge, AND/OR Sn).When M is Sn and Si -- both are present -- the LXPS material is referred to as LSTPS. As used herein, "LSTPSO," refers to LSTPS that is doped with, or has, O present. In some examples, "LSTPSO," is a LSTPS material with an oxygen content between 0.01 and 10 atomic %. "LSPS," refers to an electrolyte material having Li, Si, P, and S chemical constituents. "LSPI," refers to an electrolyte material having Li, P, S and I chemical constituents. "LSPSCl," refers to an electrolyte material having Li, Si, P, S and Cl chemical constituents. As used herein "LSTPS," refers to an electrolyte material having Li, Si, P, Sn, and S chemical constituents. As used herein, "LSPSO," refers to LSPS that is doped with, or has, O present. In some examples, "LSPSO," is a LSPS material with an oxygen content between 0.01 and 10 atomic %. As used herein, "LATP," refers to an electrolyte material having Li, As, Sn, and P chemical constituents. As used herein "LAGP," refers to an electrolyte material having Li, As, Ge, and P chemical constituents. As used herein, "LXPSO" refers to a catholyte material characterized by the formula LiₐMP_{b}S_{c}O_{d}, where M is Si, Ge, Sn, and/or Al, and where 2 ≤ a ≤ 8, 0.5 ≤ b ≤ 2.5, 4 ≤ c ≤ 12, d < 3. LXPSO refers to LXPS, as defined above, and having oxygen doping at from 0.1 to about 10 atomic %. LPSO refers to LPS, as defined above, and having oxygen doping at from 0.1 to about 10 atomic %.

As used here, "LPS," refers to an electrolyte having Li, P, and S chemical constituents. As used herein, "LPSO," refers to LPS that is doped with or has O present. In some examples, "LPSO," is a LPS material with an oxygen content between 0.01 and 10 atomic %. LPS refers to an electrolyte material that can be characterized by the formula LiₓP_{y}S_{z} where 0.33≤x≤0.67, 0.07≤y≤0.2 and 0.4≤z≤0.55. LPS also refers to an electrolyte characterized by a product formed from a mixture of Li₂S:P₂S₅ wherein the molar ratio is 10:1, 9:1, 8:1, 7:1, 6:1 5:1, 4:1, 3:1, 7:3, 2:1, or 1:1. LPS also refers to an electrolyte characterized by a product formed from a mixture of Li₂S:P₂S₅ wherein the reactant or precursor amount of Li₂S is 95 atomic % and P₂S₅ is 5 atomic %. LPS also refers to an electrolyte characterized by a product formed from a mixture of Li₂S:P₂S₅ wherein the reactant or precursor amount of Li₂S is 90 atomic % and P₂S₅ is 10 atomic %. LPS also refers to an electrolyte characterized by a product formed from a mixture of Li₂S:P₂S₅ wherein the reactant or precursor amount of Li₂S is 85 atomic % and P₂S₅ is 15 atomic %. LPS also refers to an electrolyte characterized by a product formed from a mixture of Li₂S:P₂S₅ wherein the reactant or precursor amount of Li₂S is 80 atomic % and P₂S₅ is 20 atomic %. LPS also refers to an electrolyte characterized by a product formed from a mixture of Li₂S:P₂S₅ wherein the reactant or precursor amount of Li₂S is 75 atomic % and P₂S₅ is 25 atomic %. LPS also refers to an electrolyte characterized by a product formed from a mixture of Li₂S:P₂S₅ wherein the reactant or precursor amount of Li₂S is 70 atomic % and P₂S₅ is 30 atomic %. LPS also refers to an electrolyte characterized by a product formed from a mixture of Li₂S:P₂S₅ wherein the reactant or precursor amount of Li₂S is 65 atomic % and P₂S₅ is 35 atomic %. LPS also refers to an electrolyte characterized by a product formed from a mixture of Li₂S:P₂S₅ wherein the reactant or precursor amount of Li₂S is 60 atomic % and P₂S₅ is 40 atomic %. LPS may also be doped with a lithium halide such as LiF, LiCl, LiBr, or LiI at a 0-40% molar content.

As used here, "LBS" refers to an electrolyte material characterized by the formula LiₐB_{b}S_{c} and may include oxygen and/or a lithium halide (LiF, LiCl, LiBr, LiI) at 0-40 mol%.

As used here, "LPSO" refers to an electrolyte material characterized by the formula LiₓP_{y}S_{z}O_{w} where 0.33≤x≤0.67, 0.07≤y≤0.2, 0.4≤z≤0.55, 0≤w≤0.15. Also, LPSO refers to LPS, as defined above, that includes an oxygen content of from 0.01 to 10 atomic %. In some examples, the oxygen content is 1 atomic %. In other examples, the oxygen content is 2 atomic %. In some other examples, the oxygen content is 3 atomic %. In some examples, the oxygen content is 4 atomic %. In other examples, the oxygen content is 5 atomic %. In some other examples, the oxygen content is 6 atomic %. In some examples, the oxygen content is 7 atomic %. In other examples, the oxygen content is 8 atomic %. In some other examples, the oxygen content is 9 atomic %. In some examples, the oxygen content is 10 atomic %.

As used herein, the term "LBHI" refers to a lithium conducting electrolyte including Li, B, H, and I. LBHI includes a compound having the formula aLiBH₄+bLiX where X=Cl, Br, and/or I and where a:b=7:1, 6:1, 5:1, 4:1, 3:1, 2:1, or within the range a/b=2-4. LBHI may further include nitrogen in the form of compound having the formula aLiBH₄+bLiX+cLiNH₂ where (a+c)/b=2-4 and c/a=0-10.

As used herein, the term "LPSI" refers to a lithium conducting electrolyte including Li, P, S, and I. LPSI includes a compound having the formula aLi₂S+bP₂S_{y}+cLiX where X=Cl, Br, and/or I and where y=3-5 and where a/b=2.5-4.5 and where (a+b)/c=0.5-15. LPSI may also contain up to 10 atomic % oxygen.

As used herein, the term "LIRAP" refers to a lithium rich antiperovskite and is used synonymously with "LOC" or "Li₃OCl". The composition of LIRAP is aLi₂O+bLiX+cLiOH+dAl₂O₃ where X=Cl, Br, and/or I, a/b=.7-9, c/a=0.01-1, d/a=0.001-0.1. As used herein the phrase "active surface area of the lithium metal" refers to the surface area of the lithium metal anode which is in direct contact with the solid-state electrolyte.

As used herein, the phrase "density as determined by geometric measurements," refers to measurements of density obtained by physical mass and volume measurements. Density is determined by the ratio of measured mass to the measured volume. Customary techniques including the Archimedes method have been employed for such determinations.

As used herein, the phrase "density as determined by scanning electron microscopy (SEM)," refers to the analysis of scanning electron microscopy (SEM) images. This analysis includes measuring the relative amounts of the electrolyte separator which are porous or vacant with respect to the electrolyte separator which is fully dense. The SEM images useful for this analysis include those obtained by SEM cross-sectional analysis using focused ion beam (FIB) milling.

As used herein, the phrase "lithium interfacial resistance," refers to the interfacial resistance of a material towards the incorporation of Li⁺ ions. A lithium interfacial ASR (ASR_{interface}) is calculated from the interfacial resistance (R_{interface}) via ASR_{interface}=R_{interface}*A/2 where A is the area of the electrodes in contact with the separator and the factor of 2 accounts for 2 interfaces, assuming they are symmetric, as demonstrated in Example 4, herein. R_{interface} is measured by electrical impedance spectroscopy.

As used herein, voltage is set forth with respect to lithium (*i.e.*, V versus Li) metal unless stated otherwise.

A "pressurized electrochemical cell" refers to a cell or electrode stack maintained under pressure. The pressure may be applied for example, by confining the cell in unit cell container or pouch. Electrochemical cells may be appropriately pressurized, either through stack configurations, cell configurations, cell housings, or internal cell mechanical and/or gas-springs, or springs which apply gas pressure to an electrochemical stack, such that when the stack is discharged, a stable and/or constant transfer/conduction of lithium ions through the solid-state separator is maintained by the application of pressure. The applied pressure maintains mechanical pressure magnitude and uniformity across the working electrode surface while the stack expands/contracts. In some examples, the gas-spring is a compressible fluid which can include a gas, liquid or both. Examples of pressurized cells are disclosed in International Application Publication No. WO2018/098494, titled "Pressurized Electrochemical Cell,".

Herein, isotropic, hydrostatic, and/or uniaxial pressures are determined as follows by one of two methods of determination. In one method of determination, a load cell (or pressure transducer) is inserted into a sample coin cell or pouch cell during assembly and the pressure inside the coin cell or pouch cell is obtained from it with the cell in assembled state. In another method of determination, pressure paper is inserted into a sample coin cell or pouch cell during assembly and the pressure inside the coin cell or pouch cell is obtained from it upon disassembly in a disassembled state. Isotropic pressure may be measured with a gas pressure gauge. Isotropic, hydrostatic, and/or uniaxial pressures are determined using a pressure transducer unless specified otherwise.

Herein, unless stated otherwise, molecular weights of polymers are determined in accordance with the Handbook of Polymer Synthesis, Characterization, and Processing, First Edition. Edited by Enrique Sald'var-Guerra and Eduardo Vivaldo-Lima. © 2013 John Wiley & Sons, Inc. Published 2013 by John Wiley & Sons, Inc

### C. ELECTROCHEMICAL CELLS

In some examples, provided herein is a lithium battery comprising: a negative electrode current collector (NECC); a solid-state electrolyte separator; and an interlayer between the NECC and the solid-state electrolyte separator; wherein the interlayer comprises zinc (Zn). In another instance, the interlayer comprises a lithium-zinc alloy.

In some examples, including any of the foregoing, provided herein is a pressurized electrochemical cell, wherein the electrochemical cell is pressurized at a pressure lower than 2.1 MPa (300 psi).

In some embodiments, the electrolyte separator is a lithium-stuffed garnet thin film. In some embodiments, the electrolyte separator is a solid-state thin film electrolyte separator or a pellet electrolyte separator. In some embodiments, the interlayer has a melting point lower than the melting point of lithium (Li) metal. In some embodiments, the interlayer further comprises an oxygen-containing compound.

In some examples, including any of the foregoing, the interlayer comprises a Li hydroxide, a Li oxide, a Li peroxide, Zn hydroxide, a Zn oxide, a Zn peroxide, or a combination thereof.. In some embodiments, the interlayer comprises a lithium-zinc alloy. In some embodiments, the lithium battery further comprises a Li metal negative electrode between and in direct contact with the NECC and the interlayer, wherein the interlayer is between and in direct contact with the lithium metal negative electrode and the electrolyte separator. In some embodiments, the electrolyte separator comprises at least one member selected from the group consisting of LPSI, LPSX, LSTPS, LSPSCl, LBHI, and combinations thereof.

In some examples, including any of the foregoing, the electrolyte separator comprises lithium-stuffed garnet. In some embodiments, the lithium-stuffed garnet comprises Li_{A}La_{B}M'_{C}M"_{D}Zr_{E}O_{F}, wherein 4<A<8.5, 1.5<B<4, 0≤C≤2, 0≤D≤2; 0≤E≤2.5, 10<F≤13, and M' and M" are each, independently in each instance selected from the group consisting of Al, Mo, W, Nb, Sb, Ca, Ba, Sr, Ce, Hf, Rb, Ga, and Ta. In some embodiments, the lithium-stuffed garnet comprises Li_{J}La_{K}Zr_{L}O_{M}·yAl₂O₃, wherein 5≤J≤8, 2≤K≤5, 0≤L≤3, 10≤M≤13, and 0≤y≤1. In some embodiments, the lithium-stuffed garnet comprises LiₓLa₃Zr_{z}O₁₂yAl₂O₃, wherein 5≤x≤8, 0≤y≤1, and 0<z≤2.5.

In some examples, including any of the foregoing, the lithium-stuffed garnet is selected from: LiₓLa₃Zr_{z}O₁₂0.20Al₂O₃, LiₓLa₃Zr_{z}O₁₂0.25Al₂O₃, LiₓLa₃Zr_{z}O₁₂0.30Al₂O₃, LiₓLa₃Zr_{z}O₁₂0.35Al₂O₃, LiₓLa₃Zr_{z}O₁₂0.40Al₂O₃, LiₓLa₃Zr_{z}O₁₂0.45Al₂O₃, LiₓLa₃Zr_{z}O₁₂0.50Al₂O₃, LiₓLa₃Zr_{z}O₁₂0.55Al₂O₃, LiₓLa₃Zr_{z}O₁₂0.60Al₂O₃, LiₓLa₃Zr_{z}O₁₂0.65Al₂O₃, LiₓLa₃Zr_{z}O₁₂0.70Al₂O₃, LiₓLa₃Zr_{z}O₁₂0.75Al₂O₃, LiₓLa₃Zr_{z}O₁₂0.80Al₂O₃, LiₓLa₃Zr_{z}O₁₂0.85Al₂O₃, LiₓLa₃Zr_{z}O₁₂0.90Al₂O₃, LiₓLa₃Zr_{z}O₁₂0.95Al₂O₃, LiₓLa₃Zr_{z}O₁₂Al₂O₃, or a combination thereof.

In some examples, including any of the foregoing, the interlayer and the lithium metal negative electrode comprise 99.9%-95% lithium, by mole, and 0.1% - 5% zinc, by mole. In some embodiments, the lithium negative electrode comprises of 98.9% lithium, by mole, and 1.1% zinc, by mole. In some embodiments, the lithium negative electrode comprises of 97.8% lithium, by mole, and 2.2% zinc, by mole.

In some examples, including any of the foregoing, the interlayer further comprises at least one member selected from the group consisting of Al, Au, Ag, Bi, Cr, Ge, Sb, Si, Ti, a lithium alloy thereof, oxides, hydroxides, and peroxides thereof, and combinations thereof. In some examples, including any of the foregoing, the thickness of the interlayer is about 0.01 µm, 0.1 µm, 0.2 µm, 0.3 µm, 0.4 µm, 0.5 µm, 0.6 µm, 0.7 µm, 0.8 µm, 0.9 µm, 1 µm, 2 µm, 3 µm, 4 µm, 5 µm, 6 µm, 7 µm, 8 µm, 9 µm or 10 µm. In some embodiments, the thickness of the interlayer is about 2 µm. In some embodiments, the thickness of the interlayer is about 0.1 µm to about 0.5 µm. In some embodiments, the thickness of the interlayer is about 0.1 µm to about 0.3 µm. In some embodiments, the thickness of the interlayer is at least about 25 nm, 50 nm, 100 nm, 200 nm, 300 nm, 400 nm, 500 nm, or more. In some embodiments, the thickness of the interlayer is about 0.05 µm to about 0.5 µm.

In some examples, including any of the foregoing, the interlayer decreases the contact angle of liquid lithium metal, when lithium metal is placed in contact with the interlayer compared to when lithium metal is placed in contact with the electrolyte separator. In some embodiments, the interlayer is a continuous layer covering the side of the electrolyte separator proximate to the NECC. In some embodiments, the interlayer is a discontinuous layer partially covering the side of the electrolyte separator proximate to the NECC. In some embodiments, the NECC comprises a material selected from the group consisting of carbon (C)-coated nickel (Ni), nickel (Ni), copper (Cu), aluminum (Al), and stainless steel, and combinations thereof.

In some examples, including any of the foregoing, the thickness of the electrolyte separator is from about 0.1 µm to about 200 µm. In some embodiments, the electrolyte separator is a thin film and the thickness of the thin film is from about 0.1 µm to about 200 µm. In some embodiments, the lithium battery further comprises a positive electrode provided on the side of the solid-state thin film or pellet separator opposite the NECC. In some examples, the lithium battery comprises a solid-state thin film. In some examples, the lithium battery comprises a solid-state pellet.

In some examples, the present disclosure provides an electrochemical cell comprising an lithium battery disclosed herein, wherein the electrochemical cell is pressurized at a pressure at of least about 69 kPa (10 psi). In some embodiments, the electrochemical cell is pressurized at a pressure of about least about 690 kPa (100 psi). In some embodiments, the electrochemical cell is a pressurized electrochemical cell.

In some other examples, the present disclosure provides a pressurized electrochemical cell comprising: a negative electrode current collector (NECC); a solid-state electrolyte separator; an interlayer between the negative electrode and the solid-state electrolyte separator; wherein the interlayer comprises at least one member selected from the group consisting of zinc (Zn) and tin (Sn), wherein the interlayer is charge neutral; a positive electrode; and a positive electrode current collector, wherein the electrochemical cell is pressurized at a pressure lower than 2.1 MPa (300 psi).

In some examples, including any of the foregoing, the area specific resistance (ASR) at the interface between the interlayer and the separator is between 10 Ωcm² and 0.01 Ωcm² at 10 °C. In some embodiments, the electrochemical cell further comprising a pressure-inducing element in direct contact with: (a) the one or more electrode stacks; (b) a positive electrode current collector; or (c) a negative electrode current collector.

In some examples, including any of the foregoing, the area specific resistance (ASR) at the surface of the interlayer is between 10 Ωcm² and 0.01 Ωcm² at 10 °C. In some embodiments, the electrochemical cell further comprising a pressure-inducing element in direct contact with: (a) the one or more electrode stacks; (b) a positive electrode current collector; or (c) a negative electrode current collector.

In some examples, including any of the foregoing, the area specific resistance (ASR) at the surface of the separator is between 10 Ωcm² and 0.01 Ωcm² at 10 °C. In some embodiments, the electrochemical cell further comprising a pressure-inducing element in direct contact with: (a) the one or more electrode stacks; (b) a positive electrode current collector; or (c) a negative electrode current collector.

In some examples, including any of the foregoing, a pressure-inducing element is in direct contact with either or both of the lithium metal negative electrode or the positive electrode. In some embodiments, the pressure-inducing element is in direct contact with the lithium metal negative electrode of one electrode stack and the positive electrode of another, adjacent electrode stack. In some embodiments, a pressure-inducing element is in direct contact with either or both of the negative electrode current collector or the positive electrode current collector. In some embodiments, the pressure-inducing element is in direct contact with the negative electrode current collector of one electrode stack and the positive electrode of another, adjacent electrode stack. In some embodiments, the pressure-inducing element provides hydrostatic pressure, isotropic pressure or uniaxial pressure. In some embodiments, the pressure-inducing element provides hydrostatic pressure. In some embodiments, the pressure-inducing element provides isotropic pressure. In some embodiments, the pressure-inducing element provides uniaxial pressure.

In some embodiments, the electrochemical cell maintains a pressure magnitude that varies by less than 20% across the electrode stack. In some embodiments, the cell maintains a pressure magnitude that varies by less than 20% across a surface area of 100 µm² of the electrode stack. In some embodiments, the cell maintains a pressure magnitude that varies by less than 20% across a surface area of 1,000 µm² of the electrode stack. In some embodiments, the cell maintains a pressure magnitude that varies by less than 20% across a surface area of 10,000 µm² of the electrode stack. In some embodiments, the cell maintains a pressure magnitude that varies by less than 20% across a surface area of at least 1000 µm² of the electrode stack. In some examples, the present disclosure provides an electrochemical device comprising an electrochemical cell disclosed herein or an electrode stack disclosed herein.

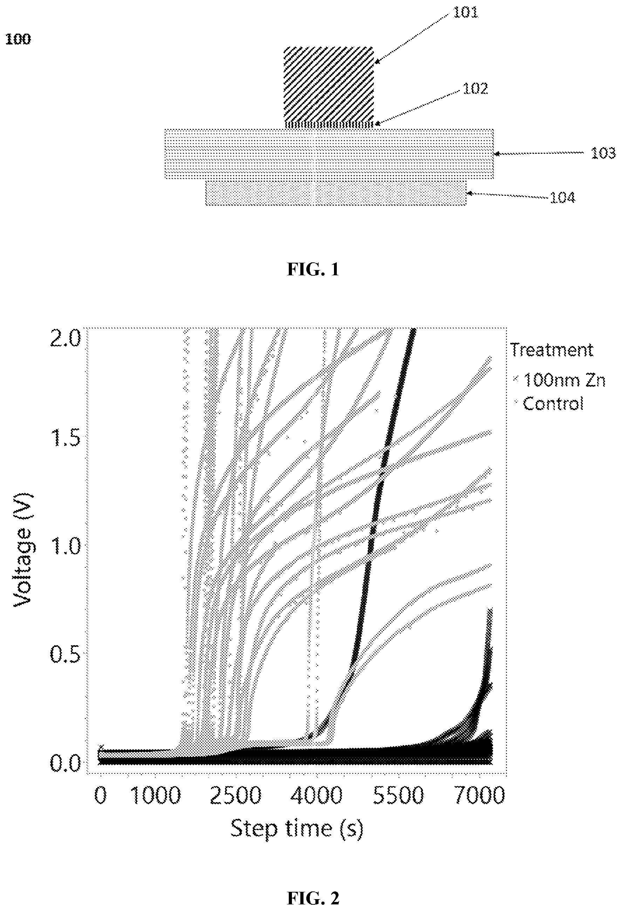

FIG. 1 shows an embodiment of a test electrochemical cell, 100, disclosed herein. The electrochemical cell, 100, includes a top electrode **101,** an interlayer 102, a solid-state electrolyte 103, and a bottom electrode **104.** A negative electrode current collector and a positive electrode current collector are not shown in this representation of a test cell.

In some examples, bottom electrode 104 could be a lithium metal electrode. In some other examples, bottom electrode 104 could be a positive electrode.

In 100, there may be electrode stacks, each stack comprising a positive electrode, solid electrolyte, and negative electrode. In some embodiments, a bonding layer is used to bond the positive electrode to the solid electrolyte. In some embodiments, the negative electrode is a lithium metal negative electrode. The electrode stack may include conductive leads which conduct electrons to and from the positive and negative electrode as the electrochemical cell discharges and charges. The conductive leads individually contact the positive and negative electrodes. The conductive leads may extend through any pressure inducing means (e.g., hydrostatic material) and any outer-shell material (e.g., battery or battery stack enclosure). While the electrodes or electrode stacks expand and contract during battery operation, the conductive leads conduct electrons.

In some examples, provided herein is an lithium battery comprising: a negative electrode current collector (NECC); a solid-state electrolyte separator; and an interlayer between the NECC and the solid-state electrolyte separator; wherein the interlayer comprises at least one member selected from the group consisting of zinc (Zn), a lithium-zinc alloy, LiₓZn_{y}, wherein 0<x≤1 and 0<y≤1, oxides thereof, hydroxides thereof, peroxides thereof, and combinations thereof. In some examples, the solid-state electrolyte separator is a thin film state electrolyte separator. In some examples, the solid-state electrolyte separator is a pellet. In an example, the interlayer comprises zinc. In another example, the interlayer comprises a lithium-zinc alloy.

In some examples, including any of the foregoing, the interlayer is a foil. In some examples, the interlayer is a foil that comprises nickel, aluminum, copper, or combinations thereof. In some examples, the interlayer is a commercially available nickel foil. In some examples, the interlayer is a commercially available copper foil. In some examples, the interlayer is an evaporated layer. In some examples, the interlayer is deposited by spraying a mixture comprising coated metal and/or metal precursors and a suitable solvent, and then evaporating the solvent.

In some examples, including any of the foregoing, the metal in the interlayer forms an alloy with lithium. In some of such examples, the alloy has a melting point lower than the melting point of pure lithium metal. In such instances, the alloy deforms faster than lithium metal alone, thereby reducing the likelihood of cavity formation between the metal negative electrode and the solid state electrolyte (SSE) interface, or the NECC and the SSE interface. In some examples, the interlayer comprises a lithium zinc alloy, a lithium tin alloy, a lithium magnesium alloy, a lithium silver alloy, a lithium aluminum alloy, a lithium indium alloy, a lithium bismuth alloy, or a combination thereof.

In some examples, including any of the foregoing, the interlayer comprises less than 5.2 atomic% zinc. In an example, the interlayer comprises less than 5.1 atomic% zinc. In another example, the interlayer comprises less than 5 atomic% zinc. In another example, the interlayer comprises less than 4.9 atomic% zinc, 4.8 atomic% zinc, 4.7 atomic% zinc, 4.6 atomic% zinc, 4.5 atomic% zinc, 4.4 atomic% zinc, 4.3 atomic% zinc, 4.2 atomic% zinc, 4.1 atomic% zinc, 4.0 atomic% zinc, 3.9. 3.8 atomic% zinc, 3.7 atomic% zinc, 3.6 atomic% zinc, 3.5 atomic% zinc, 3.4 atomic% zinc, 3.3 atomic% zinc, 3.2 atomic% zinc, 3.1 atomic% zinc, 3.0 atomic% zinc, 2.9 atomic% zinc, 2.8 atomic% zinc, 2.7 atomic% zinc, 2.6 atomic% zinc, 2.5 atomic% zinc, 2.4 atomic% zinc, 2.3 atomic% zinc, 2.2 atomic% zinc, 2.1 atomic% zinc, 2.0 atomic% zinc, 1.9 atomic% zinc, 1.8 atomic% zinc, 1.7 atomic% zinc, 1.6 atomic% zinc, 1.5 atomic% zinc, 1.4 atomic% zinc, 1.3 atomic% zinc, 1.2 atomic% zinc, 1.1 atomic% zinc, 1.0 atomic% zinc, 0.9 atomic% zinc, 0.8 atomic% zinc, 0.7 atomic% zinc, 0.6 atomic% zinc, or 0.5 atomic% zinc. In an example, the interlayer comprises less than 3.8 atomic% zinc. In some examples, the interlayer has a melting point lower than the melting point of lithium metal.

In some examples, the interlayer further comprises oxygen. In such instances, the oxygen forms dative covalent bonds or covalent bonds. In one instance the interlayer comprises a hydroxide, an oxide, or a peroxide of lithium, zinc, or a combination thereof. In one instance the interlayer comprises a hydroxide of lithium, zinc, or a combination thereof. In one instance the interlayer comprises an oxide of lithium, zinc, or a combination thereof. In one instance the interlayer comprises a peroxide of lithium, zinc, or a combination thereof.

In one example, in the lithium battery described herein, the solid-state thin film or pellet separator comprises a lithium-stuffed garnet. In one example, the solid state separator comprises a sulfide. In one example, the solid state separator comprises a borohydride. In some examples, the solid-state separator is a thin film. In some examples, the solid-state separator is a pellet.

Examples of sulfides suitable for use as solid separators include and are not limited to sulfides disclosed in U.S. Patent No. 9,634,354 titled "Solid state catholytes and electrolytes for energy storage devices;" U.S. Patent No. 9,172,114 titled "Solid state catholytes and electrolytes for energy storage devices;" U.S. Patent No. 9,553,332 titled "Solid state catholytes and electrolytes for energy storage devices;" U.S. Patent No. 9,819,024 titled "Solid state catholytes and electrolytes for energy storage devices;" PCT International Application Publication WO 2016/126610 titled "Metal sulfide anolytes for electrochemical cells;" PCT International Application Publication WO 2017/096088 titled "Lithium, phosphorus, sulfur, and iodine including electrolyte and catholyte compositions, electrolyte membranes for electrochemical devices, and annealing methods of making these electrolytes and catholytes;".

Examples of borohydrides suitable for use as solid separators include and are not limited to borohydrides disclosed in PCT International Application Publication WO 2018/075972 titled "Electrolyte separators including lithium borohydride and composite electrolyte separators of lithium-stuffed garnet and lithium borohydride;" PCT International Application No. PCT/US2017/057739, filed on October 20, 2017, titled "Borohydride-sulfide interfacial layer in all solid-state battery;".

In some examples, including any of the foregoing, the interlayer is between and in direct contact with the NECC and the solid-state electrolyte separator. In such an instance, the cell is discharged.

In some examples, including any of the foregoing, the lithium battery comprises a lithium metal negative electrode between and in direct contact with the NECC and the interlayer, wherein the interlayer is between and in direct contact with the lithium metal anode and the solid-state electrolyte separator. In such instances the cell is charged or partially charged.

In some instances, in the lithium battery, the solid-state thin film or pellet separator comprises at least one member selected from the group consisting of LPSI, LPSX, LSTPS, LSPSCl and LBHI, or a combination thereof. In some instances, the solid-state thin film or pellet separator comprises LPSI. In some instances, the solid-state thin film or pellet separator comprises LPSX. In some instances, the solid-state thin film or pellet separator comprises LSTPS. In some instances, the solid-state thin film or pellet separator comprises LSPSCl. In some instances, the solid-state thin film or pellet separator comprises LBHI. In some instances, the solid-state thin film or pellet separator comprises any two of LPSI, LPSX, LSTPS, LSPSCl and LBHI. In some instances, the solid-state thin film or pellet separator comprises any three of LPSI, LPSX, LSTPS, LSPSCl and LBHI.

In some instances, the lithium battery comprises lithium-stuffed garnet, wherein the lithium-stuffed garnet is represented by the formula Li_{A}La_{B}M'_{C}M"_{D}Zr_{E}O_{F}, wherein 4<A<8.5, 1.5<B<4, 0≤C≤2, 0≤D≤2; 0≤E≤2.5, 10<F≤13, and M' and M" are each, independently in each instance selected from the group consisting of Al, Mo, W, Nb, Sb, Ca, Ba, Sr, Ce, Hf, Rb, Ga, and Ta. In some embodiments, 6<A<8.5, 2.5<B<4, 1≤C≤2, 0≤D≤2; 1≤E≤2.5, 11<F≤13. In some embodiments, 6<A<8.5, 2.5<B<4, 1≤C≤2, 0≤D≤1; 1≤E≤2.5, 11<F≤13. In some embodiments, 6<A<8.5, 2.5<B<4, 1≤C≤2, D=0; 1≤E≤2.5, 11<F≤13. In some embodiments, M' is Al.

In some cases, lithium-stuffed garnet is represented by the formula LiₓLa_{y}Zr_{z}Oₜ.qAl₂O₃, wherein 4<x<10, 1<y<4, 1<z<3, 6<t<14, 0≤q≤1. In some cases, lithium-stuffed garnet is represented by the formula LiₓLa_{y}Zr_{z}Oₜ.qAl₂O₃, wherein 4<x<10, 1<y<4, 1<z<3, 6<t<14, 0≤q≤0.5. In some cases, lithium-stuffed garnet is represented by the formula LiₓLa_{y}Zr_{z}Oₜ.qAl₂O₃, wherein 4<x<10, 1<y<4, 1<z<3, 6<t<14, 0.5≤q≤1.

In some instances, the lithium-stuffed garnet comprises Li_{J}La_{K}Zr_{L}O_{M}·yAl₂O₃, wherein 5≤J≤8, 2≤K≤5, 0≤L≤3, 10≤M≤13, and 0≤y≤1. In some instances, the lithium-stuffed garnet comprises Li_{J}La_{K}Zr_{L}O_{M}·yAl₂O₃, wherein 6.5≤J≤8, 2≤K≤4, 1≤L≤3, 11≤M≤13, and 0≤y≤1. In some instances, the lithium-stuffed garnet comprises Li_{J}La_{K}Zr_{L}O_{M}·yAl₂O₃, wherein 6.5≤J≤8, 2≤K≤4, 1≤L≤3, 11≤M≤13, and 0≤y≤0.5. In some instances, the lithium-stuffed garnet comprises Li_{J}La_{K}Zr_{L}O_{M}·yAl₂O₃, wherein 6.5≤J≤8, 2≤K≤4, 1≤L≤3, 11≤M≤13, and 0.5≤y≤1. In some instances, the lithium-stuffed garnet comprises LiₓLa₃Zr_{z}O₁₂·yAl₂O₃, wherein 5≤x≤8, 0≤y≤1, and 0<z≤2.5.

In certain instances, the lithium-stuffed garnet comprises LiₓLa₃Zr_{z}O₁₂0.25Al₂O₃, LiₓLa₃Zr_{z}O₁₂0.35Al₂O₃, LiₓLa₃Zr_{z}O₁₂0.45Al₂O₃, LiₓLa₃Zr_{z}O₁₂0.55Al₂O₃, LiₓLa₃Zr_{z}O₁₂0.65Al₂O₃, LiₓLa₃Zr_{z}O₁₂0.75Al₂O₃, LiₓLa₃Zr_{z}O₁₂0.85Al₂O₃, LiₓLa₃Zr_{z}O₁₂0.95Al₂O₃, LiₓLa₃Zr_{z}O₁₂Al₂O₃, or a combination thereof. In certain instances the lithium-stuffed garnet comprises, LiₓLa₃Zr_{z}O₁₂0.25Al₂O₃. In certain instances the lithium-stuffed garnet comprises LiₓLa₃Zr_{z}O₁₂0.35Al₂O₃. In certain instances, the lithium-stuffed garnet comprises LiₓLa₃Zr_{z}O₁₂0.45Al₂O₃. In certain instances, the lithium-stuffed garnet comprises LiₓLa₃Zr_{z}O₁₂0.55Al₂O₃. In certain instances the lithium-stuffed garnet comprises LiₓLa₃Zr_{z}O₁₂0.65Al₂O₃. In certain instances the lithium-stuffed garnet comprises LiₓLa₃Zr_{z}O₁₂0.75Al₂O₃. In certain instances the lithium-stuffed garnet comprises LiₓLa₃Zr_{z}O₁₂0.85Al₂O₃. In certain instances the lithium-stuffed garnet comprises LiₓLa₃Zr_{z}O₁₂0.95Al₂O₃. In certain instances the lithium-stuffed garnet comprises LiₓLa₃Zr_{z}O₁₂Al₂O₃.

In certain instances the lithium-stuffed garnet comprises LiₓLa₃Zr_{z}O₁₂0.20Al₂O₃, LiₓLa₃Zr_{z}O₁₂0.30Al₂O₃, LiₓLa₃Zr_{z}O₁₂0.40Al₂O₃, LiₓLa₃Zr_{z}O₁₂0.50Al₂O₃, LiₓLa₃Zr_{z}O₁₂0.60Al₂O₃, LiₓLa₃Zr_{z}O₁₂0.70Al₂O₃, LiₓLa₃Zr_{z}O₁₂0.80Al₂O₃, LiₓLa₃Zr_{z}O₁₂0.90Al₂O₃, LiₓLa₃Zr_{z}O₁₂Al₂O₃, or a combination thereof. In certain instances the lithium-stuffed garnet comprises LiₓLa₃Zr_{z}O₁₂0.20Al₂O₃. In certain instances the lithium-stuffed garnet comprises LiₓLa₃Zr_{z}O₁₂0.30Al₂O₃. In certain instances, the lithium-stuffed garnet comprises LiₓLa₃Zr_{z}O₁₂0.40Al₂O₃. In certain instances, the lithium-stuffed garnet comprises LiₓLa₃Zr_{z}O₁₂0.50Al₂O₃. In certain instances the lithium-stuffed garnet comprises LiₓLa₃Zr_{z}O₁₂0.60Al₂O₃. In certain instances the lithium-stuffed garnet comprises LiₓLa₃Zr_{z}O₁₂0.70Al₂O₃. In certain instances the lithium-stuffed garnet comprises LiₓLa₃Zr_{z}O₁₂0.80Al₂O₃. In certain instances the lithium-stuffed garnet comprises LiₓLa₃Zr_{z}O₁₂0.90Al₂O₃. In certain instances the lithium-stuffed garnet comprises LiₓLa₃Zr_{z}O₁₂Al₂O₃.

In some examples, in the lithium battery, the interlayer and the lithium metal negative electrode comprise 99.9%-95% lithium, by mole, and 0.1% - 5% zinc, by mole. In some examples, in the lithium battery, the interlayer and the lithium metal negative electrode comprise 99.9%-99% lithium, by mole, and 0.1% - 1% zinc, by mole. In some examples, in the lithium battery, the interlayer and the lithium metal negative electrode comprise 99.9%-98% lithium, by mole, and 0.1% - 2% zinc, by mole. In some examples, in the lithium battery, the interlayer and the lithium metal negative electrode comprise 99.9%-97% lithium, by mole, and 0.1% - 3% zinc, by mole. In some examples, in the lithium battery, the interlayer and the lithium metal negative electrode comprise 99.9%-96% lithium, by mole, and 0.1% - 4% zinc, by mole. The composition may be measured by XPS, SIMS, Auger or TEM-EELS. In some examples, in the lithium battery, the negative electrode comprise 99.9%-95% lithium, by mole, and 0.1% - 5% zinc, by mole. In some examples, in the lithium battery, the negative electrode comprises of 98.9% lithium, by mole, and 1.1% zinc, by mole. In some examples, in the lithium battery, the negative electrode comprises of 97.8% lithium, by mole, and 2.2% zinc, by mole. The composition of the interlayer and the lithium metal negative electrode may be measured by XPS, SIMS, Auger or TEM-EELS. The composition of the interlayer and the lithium metal negative electrode is determined in the discharged state or the charged state. In some instances, the composition of the interlayer and the lithium metal negative electrode is determined relative to all the lithium, or relative to the 1 µm inch thickness that is nearest to the separator.

In some examples, the thickness of the interlayer is less than 600 µm. In some of these embodiments, the interlayer comprises Sn. In some of these embodiments, the interlayer comprises Zn. In some of these embodiments, the interlayer comprises Al. In some of these embodiments, the interlayer comprises Bi.

Without wishing to be bound by theory, a thicker interlayer may allow for more lateral diffusion of lithium, which may result in a more uniform plating and stripping of lithium during charge and discharge cycles. In contrast, without wishing to be bound by theory, a thinner interlayer may allow for a lower cost of the cell, better energy density, lower process time and increased scalability, and may consume less lithium as a lithium-metal alloy.

In some examples, in the lithium battery described above, the interlayer is a continuous layer covering the side of the solid-state thin film or pellet separator proximate the NECC. In other instances, in the lithium battery described above, the interlayer is a discontinuous layer covering the side of the solid-state thin film or pellet separator proximate the NECC. In some examples, the lithium battery comprises a solid-state thin film. In some examples, the lithium battery comprises a solid-state pellet.

In some cases, an interlayer may have fluctuations in the thickness of the layer across the entire surface of the layer. In some cases, a portion of the layer may be thicker than another portion of the layer, which may form patches, grains, raised portions, bare spots, or a combination thereof. In certain cases, as the lithium battery is charged and discharged, the thickness of the interlayer, and/or the uniformity of the interlayer, may change. For example, in some examples, the interlayer is uniformly distributed across the surface of either the NECC or the solid-state separator. In certain of these cases, as the lithium battery is charged and discharged, patches, grains, raised portions, bare spots, or a combination thereof, may begin to form which were not present when the lithium battery was first assembled.

In other instances, in the lithium battery described above, the interlayer is a discontinuous layer covering 50 % of the surface area of the side of the solid-state thin film or pellet separator proximate to the NECC. In other instances, in the lithium battery described above, the interlayer is a discontinuous layer covering 60 % of the surface area of the side of the solid-state thin film or pellet separator proximate to the NECC. In other instances, in the lithium battery described above, the interlayer is a discontinuous layer covering 70 % of the surface area of the side of the solid-state thin film or pellet separator proximate to the NECC. In other instances, in the lithium battery described above, the interlayer is a discontinuous layer covering 80 % of the surface area of the side of the solid-state thin film or pellet separator proximate to the NECC. In other instances, in the lithium battery described above, the interlayer is a discontinuous layer covering 90 % of the surface area of the side of the solid-state thin film or pellet separator proximate to the NECC. In other instances, in the lithium battery described above, the interlayer is a discontinuous layer covering 99 % of the surface area of the side of the solid-state thin film or pellet separator proximate to the NECC. In other instances, in the lithium battery described above, the interlayer is a discontinuous layer covering 50 -99 % of the surface area of the side of the solid-state thin film or pellet separator proximate to the NECC.

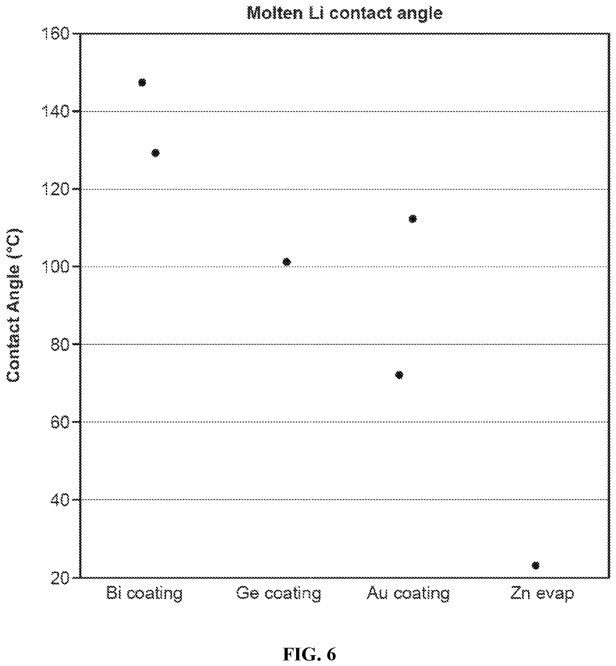

In some examples, in the lithium battery described above, the interlayer decreases the contact angle of liquid lithium metal at the solid state separator. Contact angle is measured by dropping molten lithium on the surface and taking an image and measuring the geometric contact angle as described in Example 4 and shown in FIG. 6. The contact angle of an interlayer may depend on the metal or metals of the interlayer. In some cases, the contact angle may range from about 10 °C to about 200 °C.

In some examples, in the lithium battery described above, the NECC comprises a material selected from the group consisting of carbon (C)-coated nickel (Ni), nickel (Ni), copper (Cu), aluminum (Al), stainless steel, and a combination thereof.

In some examples, in the lithium battery described above, the thickness of the solid-state thin film or pellet separator is from about 0.1 µm to about 200 µm. In some examples, in the lithium battery described above, the thickness of the solid-state thin film or pellet separator is from about 1 µm to about 200 µm.

In some examples, in the lithium battery described above, the solid-state thin film separator comprises garnet, and the thickness of the solid-state thin film separator is about 1 µm to about 200 µm, about 10 µm to about 100 µm, or about 20 µm to about 50 µm.

In some examples, in the lithium battery described above, the stack further comprises a positive electrode provided on the side of the solid-state electrolyte separator opposite the NECC.

In some examples, in the lithium battery described above, the stack further comprises a positive electrode provided on the side of the solid-state thin film or pellet separator opposite the NECC.

In some instances, provided herein is an electrochemical cell comprising an lithium battery described above, wherein the electrochemical cell is pressurized at a pressure lower than 2.1 MPa (300 psi).

In an embodiment, provided herein is a pressurized electrochemical cell comprising: a negative electrode current collector (NECC); a solid-state thin film or pellet separator; an interlayer between the negative electrode and the solid-state thin film or pellet; wherein the interlayer comprises at least one member selected from the group consisting of zinc (Zn), a lithium-zinc alloy, LiₓZn_{y}, wherein 0<x≤1 and 0<y≤1, oxides thereof, hydroxides thereof, peroxides thereof, and combinations thereof; a positive electrode; and a positive electrode current collector, wherein the electrochemical cell is pressurized at a pressure less than 2.1 MPa (300 psi).

In such embodiments, the pressurized electrochemical cell further comprises a lithium metal negative electrode.

In some examples, the cell is not under any external pressure. In some examples, a cell is pressurized to at least about 69 kPa (10 psi). In some examples, a cell is pressurized to at least about 350 kPa (50 psi). In some examples, the cell is pressurized to at least about 690 kPa (100 psi). In some examples, the cell is pressurized to at least about 1.4 MPa (200 psi). In some examples, a cell is pressurized to about 69 kPa (10 psi) to about 1.4 MPa (200 psi), or about 350 kPa (50 psi) to about 1.0 MPa (150 psi).

In some examples, the cell is under external pressure. In some examples, a cell may be under pressure from mechanical pressures that are included in a cell housing.

In some examples, the metal in the interlayer forms an alloy with lithium. In some of such examples, the alloy has a melting point lower than the melting point of pure lithium metal. In such instances, the alloy deforms faster than lithium metal alone, thereby reducing the likelihood of cavity formation between the metal negative electrode and the garnet interface, the NECC and the garnet interface. In an example, the interlayer comprises less than 5.2 atomic% zinc. In an example, the interlayer comprises less than 5.1 atomic% zinc. In another example, the interlayer comprises less than 5 atomic% zinc. In another example, the interlayer comprises less than 4.9, 4.8, 4.7, 4.6, 4.5, 4.4, 4.3, 4.2, 4.1, 4.0., 3.9. 3.8, 3.7, 3.6, 3.5, 3.4, 3.3, 3.2, 3.1, 3.0, 2.9, 2.8, 2.7, 2.6, 2.5, 2.4, 2.3, 2.2, 2.1, 2.0, 1.9, 1.8, 1.7, 1.6, 1.5, 1.4, 1.3, 1.2, 1.1, 1.0, 0.9, 0.8, 0.7, 0.6, or 0.5 atomic% zinc. In an example, the interlayer comprises less than 3.8 atomic% zinc. In an instance, the interlayer in the pressurized electrochemical cell described above has a melting point lower than the melting point of lithium metal.

In certain instances, the interlayer in the pressurized electrochemical cell described above further comprises oxygen or an oxygen-including compound. In such instances, the oxygen forms dative covalent bonds or covalent bonds.

In some examples of the pressurized electrochemical cell described above, the solid-state thin film or pellet separator comprises lithium-stuffed garnet. In some examples of the pressurized electrochemical cell described above, the solid state separator comprises a sulfide as described herein. In some examples of the pressurized electrochemical cell described above, the solid state separator comprises a borohydride as described herein.

In some examples of the pressurized electrochemical cell described above, the cell is completely discharged and the interlayer is between and in direct contact with the NECC and the solid-state thin film or pellet.

In some examples of the pressurized electrochemical cell described above, the solid-state thin film or pellet separator comprises at least one member selected from LPSI, LPSX, LSTPS, LSPSCl and LBHI. In some instances, the solid-state thin film or pellet separator comprises LPSI. In some instances, the solid-state thin film or pellet separator comprises LPSX. In some instances, the solid-state thin film or pellet separator comprises LSTPS. In some instances, the solid-state thin film or pellet separator comprises LSPSCl. In some instances, the solid-state thin film or pellet separator comprises LBHI. In some instances, the solid-state thin film or pellet separator comprises any two of LPSI, LPSX, LSTPS, LSPSCl and LBHI. In some instances, the solid-state thin film or pellet separator comprises any three of LPSI, LPSX, LSTPS, LSPSCl and LBHI.

In some examples of the pressurized electrochemical cell described above, the lithium-stuffed garnet comprises Li_{A}La_{B}M'_{C}M"_{D}Zr_{E}O_{F}, wherein 4<A<8.5, 1.5<B<4, 0≤C≤2, 0≤D≤2; 0≤E≤2.5, 10<F≤13, and M' and M" are each, independently in each instance selected from the group consisting of Al, Mo, W, Nb, Sb, Ca, Ba, Sr, Ce, Hf, Rb, Ga, and Ta. In some of such instances, the lithium-stuffed garnet comprises LiₓLa₃Zr_{z}O₁₂yAl₂O₃, wherein 5≤x≤8, 0≤y≤1, and 0<z≤2.5. In certain instances the lithium-stuffed garnet comprises LiₓLa₃Zr_{z}O₁₂0.25Al₂O₃, LiₓLa₃Zr_{z}O₁₂0.35Al₂O₃, LiₓLa₃Zr_{z}O₁₂0.45Al₂O₃, LiₓLa₃Zr_{z}O₁₂0.55Al₂O₃, LiₓLa₃Zr_{z}O₁₂0.25Al₂O₃, LiₓLa₃Zr_{z}O₁₂0.65Al₂O₃, LiₓLa₃Zr_{z}O₁₂0.25Al₂O₃, LiₓLa₃Zr_{z}O₁₂0.75Al₂O₃, LiₓLa₃Zr_{z}O₁₂0.85Al₂O₃, LiₓLa₃Zr_{z}O₁₂0.95Al₂O₃, LiₓLa₃Zr_{z}O₁₂Al₂O₃, or a combination thereof. In certain instances the lithium-stuffed garnet comprises , LiₓLa₃Zr_{z}O₁₂0.25Al₂O₃. In certain instances the lithium-stuffed garnet comprises LiₓLa₃Zr_{z}O₁₂0.35Al₂O₃. In certain instances, the lithium-stuffed garnet comprises LiₓLa₃Zr_{z}O₁₂0.45Al₂O₃. In certain instances, the lithium-stuffed garnet comprises LiₓLa₃Zr_{z}O₁₂0.55Al₂O₃. In certain instances the lithium-stuffed garnet comprises LiₓLa₃Zr_{z}O₁₂0.25Al₂O₃. In certain instances the lithium-stuffed garnet comprises LiₓLa₃Zr_{z}O₁₂0.65Al₂O₃. In certain instances the lithium-stuffed garnet comprises LiₓLa₃Zr_{z}O₁₂0.25Al₂O₃. In certain instances the lithium-stuffed garnet comprises LiₓLa₃Zr_{z}O₁₂0.75Al₂O₃. In certain instances the lithium-stuffed garnet comprises LiₓLa₃Zr_{z}O₁₂0.85Al₂O₃. In certain instances the lithium-stuffed garnet comprises LiₓLa₃Zr_{z}O₁₂0.95Al₂O₃. In certain instances the lithium-stuffed garnet comprises LiₓLa₃Zr_{z}O₁₂Al₂O₃.

In some examples, including any of the foregoing, the sulfide is characterized by one of the following formula:
LiₐSi_{b}Sn_{c}P_{d}SₑO_{f}, wherein 2≤a≤8, 0≤b≤1, 0≤c≤1, b+c=1, 0.5≤d≤2.5, 4≤e≤12, and
0 < f ≤ 10;
LiₐSi_{b}P_{c}S_{d}Xₑ, wherein 8<a<12, 1<b<3, 1<c<3, 8<d<14, and 0<e<1, wherein X is F, Cl, Br, or I;
Li_{g}AsₕSnⱼSₖOₗ, wherein 2≤g≤6, 0≤h≤1, 0≤j≤1, 2≤k≤6, and 0≤l≤10;
LiₘPₙSₚI_{q}, wherein 2≤m≤6, 0≤n≤1, 0≤p≤ 1, 2≤q≤ 6;
a mixture of (Li₂S):(P₂S₅) having a molar ratio of Li₂S:P₂S₅ from about 10:1 to about 6:4 and LiI, wherein the ratio of [(Li₂S):(P₂S₅)]:LiI is from 95:5 to 50:50;
LPS+X, wherein X is selected from Cl, I, or Br;
vLi₂S+wP₂S₅+ yLiX;
vLi₂S+wSiS₂+ yLiX; or
In some examples, including any of the foregoing, the sulfide comprises LSTPS.₂S+wB₂S₃+ yLiX.

In some examples, including any of the foregoing, the solid-state thin film or pellet separator comprises LSTPS.

As used herein the phrase "borohydride" refers to a layer which includes a borohydride compound and which adheres a lithium-stuffed garnet layer to a sulfide electrolyte layer or sulfide including buffer. Non-limiting examples of the borohydride include, but are not limited to, 3LiBH₄·2LiCl·3LiNH₂ (LBHIN) or 3LiBH₄·4LiCl·9LiNH₂. The borohydride may be any compound set forth in WO 2018/075972, which published April 26, 2018, and was filed as International PCT Patent Application No. PCT/US2017/057735, and is entitled "Electrolyte separators including lithium borohydride and composite electrolyte separators of lithium-stuffed garnet and lithium borohydride,". The borohydride may be any compound set forth in International PCT Patent Application No. PCT/US2017/057739, filed October 20, 2017, and is entitled "Borohydride-sulfide interfacial layer in all solid state battery,".

In some examples, including any of the foregoing, the borohydride comprises a lithium borohydride, a sodium borohydride, or a potassium borohydride.

In some examples, including any of the foregoing, the lithium borohydride, sodium borohydride, or potassium borohydride is doped with LiNH₂.

In some examples, including any of the foregoing, any one or more of the lithium borohydride, sodium borohydride, or potassium borohydride is doped with LiI.

In some examples, including any of the foregoing, any one or more of the lithium borohydride, sodium borohydride, or potassium borohydride is doped with LiNH₂ and LiI.

In some examples, including any of the foregoing, the borohydride comprises a borohydride composition comprising A(LiBH₄)(1-A)(P₂S₅), wherein 0.05≤A≤0.95. In some examples, 0.5<A<0.95. In some examples, A is 0.85, 0.9, or 9.95.

In some examples, including any of the foregoing, the borohydride comprises 0.9(LiBH₄)0.1(P₂S₅).

In some examples, including any of the foregoing, the borohydride comprises a borohydride composition including A·(LiBH₄)·B·(LiX)·C ·(LiNH₂). In some examples, 2.5<A<3.5, 3.5<B<4.5, and 8.5<C<9.5.

In some examples, including any of the foregoing, the borohydride comprises a borohydride composition, wherein the composition is 3LiBH₄·2LiCl·3LiNH₂ or 3LiBH₄·4LiCl·9LiNH₂. In some examples, including any of the foregoing, the borohydride comprises a borohydride composition selected from LBHIN and LBHN.

In some examples, including any of the foregoing, the borohydride comprises KBH₄ and LiNH₂.

In some examples, including any of the foregoing, the borohydride is amorphous.

In some examples, including any of the foregoing, the borohydride is semi-crystalline.

In some examples, including any of the foregoing, the borohydride is polycrystalline.

In some examples, including any of the foregoing, the lithium-stuffed garnet layer comprises a lithium-stuffed garnet selected from LiₓLa_{y}Zr_{z}Oₜ·qAl₂O₃, wherein 4<x<10, 1<y<4, 1<z<3, 6<t<14, and 0≤q≤1.

In some examples, including any of the foregoing, the lithium-stuffed garnet layer comprises a lithium-stuffed garnet selected from Li₇La₃Zr₂O₁₂·Al₂O₂O₃ and
Li₇La₃Zr₂O₁₂·0.35Al₂O₃.

In some examples, including any of the foregoing, the lithium-stuffed garnet is doped with Nb, Ga, and/or Ta.₇La₃Zr₂O₁₂·Al₂O₃ and Li₇La₃Zr₂O₁₂·0.35Al₂O₃.

In some examples, including any of the foregoing, the lithium-stuffed garnet layer comprises a lithium-stuffed garnet characterized by the formula LiₐLa_{b}Zr_{c}Al_{d}Me"ₑO_{f}, wherein 5<a<8.5; 2<b<4; 0≤c≤2.5; 0≤d<2; 0≤e<2, and 10<f<13 and Me" is a metal selected from the group consisting of Nb, Ga, Ta, and combinations thereof.

In some examples, including any of the foregoing, the lithium-stuffed garnet layer comprises a lithium-stuffed garnet oxide characterized by the formula LiᵤLaᵥZrₓO_{y}·zAl₂O₃, wherein u is a rational number from 4 to 8; v is a rational number from 2 to 4; x is a rational number from 1 to 3; y is a rational number from 10 to 14; and z is a rational number from 0.05 to 1; wherein u, v, x, y, and z are selected so that the lithium-stuffed garnet oxide is charge neutral.

In some examples of the pressurized electrochemical cell described above, the interlayer and the lithium metal negative electrode comprise 99.9-95 at% lithium and 0.1 - 5 at% zinc. In some examples, in the lithium battery, the interlayer and the lithium metal negative electrode comprise 99.9-99 at% lithium and 0.1 - 1 at% zinc. In some examples, in the lithium battery, the interlayer and the lithium metal negative electrode comprise 99.9-98 at% lithium and 0.1 - 2 at% zinc. In some examples, in the lithium battery, the interlayer and the lithium metal negative electrode comprise 99.9-97 at% lithium and 0.1 - 3 at% zinc. In some examples, in the lithium battery, the interlayer and the lithium metal negative electrode comprise 99.9-96 at% lithium and 0.1 - 4 at% zinc. The composition of the interlayer and lithium metal negative electrode may be measured by XPS, SIMS, Auger or TEM-EELS.

In some examples of the pressurized electrochemical cell described above, the interlayer and the negative electrode comprise 99.9-95 at% lithium and 0.1 - 5 at% zinc. In some examples of the pressurized electrochemical cell described above, the negative electrode comprises 98.9 at% lithium and 1.1 at% zinc. In some examples of the pressurized electrochemical cell described above, the negative electrode comprises 97.8 at% lithium and 2.2 at% zinc.

In some examples of the pressurized electrochemical cell described above, the interlayer further comprises at least one member selected from the group consisting of Al, Au, Ag, Bi, Cr, Ge, Sb, Si, Ti, oxides thereof, hydroxides thereof, peroxides thereof, and combinations thereof. In some instances the interlayer further comprises Al, and/or a lithium alloy thereof, oxides, hydroxides, or peroxides thereof. In some instances the interlayer further comprises Au, and/or a lithium alloy thereof, oxides, hydroxides, or peroxides thereof. In some instances the interlayer further comprises Ag, and/or a lithium alloy thereof, oxides, hydroxides, or peroxides thereof. In some instances the interlayer further comprises Bi, and/or a lithium alloy thereof, oxides, hydroxides, or peroxides thereof. In some instances the interlayer further comprises Cr, and/or a lithium alloy thereof, oxides, hydroxides, or peroxides thereof. In some instances the interlayer further comprises Ge, and/or a lithium alloy thereof, oxides, hydroxides, or peroxides thereof. In some instances the interlayer further comprises Sb, and/or a lithium alloy thereof, oxides, hydroxides, or peroxides thereof. In some instances the interlayer further comprises Si, and/or a lithium alloy thereof, oxides, hydroxides, or peroxides thereof. In some instances the interlayer further comprises Ti, and/or a lithium alloy thereof, oxides, hydroxides, or peroxides thereof.

In some examples of the pressurized electrochemical cell described above, the thickness of the interlayer is about 0.1 µm, 0.2 µm, 0.3 µm, 0.4 µm, 0.5 µm, 1 µm, 2 µm, 3 µm, 4 µm, 5 µm, 6 µm, 7 µm, 8 µm, 9 or 10 µm. In some examples of the pressurized electrochemical cell described above, the thickness of the interlayer is about 0.1 µm. In some examples of the pressurized electrochemical cell described above, the thickness of the interlayer is about 0.2 µm. In some examples of the pressurized electrochemical cell described above, the thickness of the interlayer is about 0.3 µm. In some examples of the pressurized electrochemical cell described above, the thickness of the interlayer is about 0.4 µm. In some examples of the pressurized electrochemical cell described above, the thickness of the interlayer is about 0.5 µm. In some examples of the pressurized electrochemical cell described above, the thickness of the interlayer is about 0.6 µm. In some examples of the pressurized electrochemical cell described above, the thickness of the interlayer is about 0.7 µm. In some examples of the pressurized electrochemical cell described above, the thickness of the interlayer is about 0.8 µm. In some examples of the pressurized electrochemical cell described above, the thickness of the interlayer is about 0.9 µm. In some examples of the pressurized electrochemical cell described above, the thickness of the interlayer is about 1 µm. In some examples of the pressurized electrochemical cell described above, the thickness of the interlayer is about 2 µm. In some examples of the pressurized electrochemical cell described above, the thickness of the interlayer is about 3 µm. In some examples of the pressurized electrochemical cell described above, the thickness of the interlayer is about 4 µm. In some examples of the pressurized electrochemical cell described above, the thickness of the interlayer is about 5 µm. In some examples of the pressurized electrochemical cell described above, the thickness of the interlayer is about 6 µm. In some examples of the pressurized electrochemical cell described above, the thickness of the interlayer is about 7 µm. In some examples of the pressurized electrochemical cell described above, the thickness of the interlayer is about 8 µm. In some examples of the pressurized electrochemical cell described above, the thickness of the interlayer is about 9 µm. In some examples of the pressurized electrochemical cell described above, the thickness of the interlayer is about 10 µm. In some examples of the pressurized electrochemical cell described above, the thickness of the interlayer is about 2 µm. In some examples of the pressurized electrochemical cell described above, the thickness of the interlayer is about 0.1 µm to about 0.5 µm. In some examples of the pressurized electrochemical cell described above, the thickness of the interlayer is about 0.1 µm to about 0.3 µm.

In some examples of the pressurized electrochemical cell described above, the interlayer decreases the contact angle of liquid lithium metal at the solid state separator.

In some examples of the pressurized electrochemical cell described above, the interlayer is a continuous layer covering the side of the solid-state thin film or pellet separator proximate the negative electrode or NECC.

In some examples of the pressurized electrochemical cell described above, the interlayer is a discontinuous layer covering the side of the solid-state thin film or pellet separator proximate the negative electrode or NECC.

In some examples of the pressurized electrochemical cell described above, the lithium battery described above, the interlayer is a continuous layer covering the side of the solid-state thin film or pellet separator proximate the NECC. In other instances, in the lithium battery described above, the interlayer is a discontinuous layer covering the side of the solid-state thin film or pellet separator proximate the NECC. In other instances, in the lithium battery described above, the interlayer is a discontinuous layer covering 50 % of the surface area of the side of the solid-state thin film or pellet separator proximate to the NECC. In other instances, in the lithium battery described above, the interlayer is a discontinuous layer covering 60 % of the surface area of the side of the solid-state thin film or pellet separator proximate to the NECC. In other instances, in the lithium battery described above, the interlayer is a discontinuous layer covering 70 % of the surface area of the side of the solid-state thin film or pellet separator proximate to the NECC. In other instances, in the lithium battery described above, the interlayer is a discontinuous layer covering 80 % of the surface area of the side of the solid-state thin film or pellet separator proximate to the NECC. In other instances, in the lithium battery described above, the interlayer is a discontinuous layer covering 90 % of the surface area of the side of the solid-state thin film or pellet separator proximate to the NECC. In other instances, in the lithium battery described above, the interlayer is a discontinuous layer covering 99 % of the surface area of the side of the solid-state thin film or pellet separator proximate to the NECC. In other instances, in the lithium battery described above, the interlayer is a discontinuous layer covering 50 -99 % of the surface area of the side of the solid-state thin film or pellet separator proximate to the NECC. In some examples of the pressurized electrochemical cell described above, the NECC comprises a material selected from the group consisting of carbon (C)-coated nickel (Ni), nickel (Ni), copper (Cu), aluminum (Al), and stainless steel.

In some examples of the pressurized electrochemical cell described above, the thickness of the solid-state thin film or pellet separator is from about 0.1 µm to about 200 µm.

In some examples of the pressurized electrochemical cell described above, the thickness of the solid-state thin film or pellet separator is from about 1 µm to about 200 µm.

In some examples of the pressurized electrochemical cell described above, the interface between the interlayer and the separator has an area specific resistance (ASR) of 10 Ωcm² to 0.01 Qcm2 when measured at 10 °C. In some examples, the interface between the interlayer and the separator has an ASR of 10 Ω cm² to 0.01 Ωcm² when measured at 0 °C. In some examples, the interface between the interlayer and the separator has an ASR of 10 Ω cm² to 0.01 Ωcm² when measured at -10 °C. In some examples, the interface between the interlayer and the separator has an ASR of 10 Ω cm² to 0.01 Ωcm² when measured at -20 °C. In some examples, the interface between the interlayer and the separator has an ASR of 10 Ω cm² to 0.01 Ωcm² when measured at -30 °C. In some examples, the interface between the interlayer and the separator has an ASR of 10 Ω cm² to 0.01 Ωcm² when measured at 20 °C. In some examples, the interface between the interlayer and the separator has an ASR of 10 Ω cm² to 0.01 Ωcm² when measured at 30 °C.

In some examples of the pressurized electrochemical cell described above, the cell further comprises a pressure-inducing element in direct contact with the one or more electrode stacks or with a positive electrode current collector or a negative electrode current collector which is in direct contact with the one or more electrode stacks.

In some examples of the pressurized electrochemical cell described above, a pressure-inducing element is in direct contact with either or both of the lithium metal negative electrode or the positive electrode.

In some examples of the pressurized electrochemical cell described above, the pressure-inducing element is in direct contact with the lithium metal negative electrode of one electrode stack and the positive electrode of another electrode stack.

In some examples of the pressurized electrochemical cell described above, a pressure-inducing element is in direct contact with either or both of the negative electrode current collector or the positive electrode current collector.

In some examples of the pressurized electrochemical cell described above, the pressure-inducing element is in direct contact with the negative electrode current collector of one electrode stack and the positive electrode of another electrode stack.

In some instances, the cell, or electrode stacks, are held in place by cell housing which itself acts a pressure inducing element, in addition to other pressure inducing elements (such as, e.g., hydrostatic material or screws or rubber bands). The combination of the pressure inducing elements, and the assembly, provides pressure to the enclosed cells / stacks. In some examples, the pressure inducing element is a rubber material (e.g., a rubber band or elastic band). In some examples, the pressure inducing element is a metal spring. In some examples, the pressure inducing element is a gas. In some examples, the pressure inducing element is a gas contained within a bladder. In some examples, the pressure inducing element is a fluid contained within a bladder.

In some instances, as the stacks/electrodes expand during a charge, the stacks/electrodes increase in width. To accommodate the pressure change that results from this expansion (or the corresponding contraction on discharge), and to maintain a uniform pressure on the stack, a compressible fluid spring comprising a gas and/or liquid is included as a pressure inducing elements. In some examples, the compressible fluid spring includes Argon gas. In some examples, the compressible fluid spring includes Helium gas. In some examples, the compressible fluid spring includes polypropylene. In some examples, the compressible fluid spring includes PVdF. In some examples, the compressible fluid spring includes Argon and Helium gas. In some of these examples, the Argon and/or Helium gas is contained within a polypropylene bladder. In some of these examples, the Argon and/or Helium gas is contained within a polyvinylidene fluoride bladder. In some instances, the compressible fluid is a liquid which evaporates to form a gas phase that exerts a pressure on the stacks/electrodes.

In some other examples, external pressure is applied by a pressure-inducing module (not shown). In some examples, the pressure-inducing module can induce a pressure of up to 35 kPa (5 psi), up to 69 kPa (10 psi), up to 140 kPa (20 psi), up to 210 kPa (30 psi), up to 275 kPa (40 psi), up to 340 kPa (50 psi), or up to 690 kPa (100 psi), or up to 2.1 MPa (300 psi), or up to 3.4 MPa (500 psi), or up to 6.0 MPa (1000 psi). In some examples, the pressure-inducing module can induce a pressure of 340 kPa (50 psi). In some examples, the pressure-inducing module can induce a pressure of 690 kPa (100 psi). In some examples, the pressure-inducing module can induce a pressure of 2.1 MPa (300 psi). In some examples, the pressure-inducing module can induce a pressure of 3.4 MPa (500 psi). In some examples, the pressure-inducing module can induce a pressure of 6.9 MPa (1000 psi). In some examples, the walls of the outer enclosure include a pressure release valve that can be actuated to release pressure, as a shutdown mechanism. This mechanism would release pressure such that the pressure in the cell or stack drops to a point where the area-specific resistance in the cell/stack, exceeds a threshold for conducting a current.

As an example, a constant pressure (moles of material in the gas phase) may be maintained across a wide temperature range by using active feedback control with a pressure sensor and an actuator that removes liquid or gas from the cell into a separate reservoir. The actuator may be a peristaltic pump or the like. The liquid-vapor equilibrium may comprise a mixture of different components or one component. The materials should be inert to the other components of the battery, particularly the electrode materials and electrolyte. An additional requirement is that the material or material combination has a continuous, finite vapor pressure across the operating temperature range and retains some liquid phase across the operating temperature range. Examples of suitable materials include short chain hydrocarbons. Therefore, the effective spring constant does not vary with temperature, despite the pressure being provided by a gas. In some examples, the liquid/vapor equilibrium is an equilibrium for a mixture of ethane (*i.e.,* C₂H₆) and toluene.

In some instances, a pressure inducing element provides uniaxial and hydrostatic pressure to one or more electrochemical cells and includes a seal around the one or more electrochemical cells. The one or more electrochemical cells are enclosed by a top plate and a bottom plate. Screws apply tension between the top plate and the bottom plate.

In some examples of the electrochemical cell, the pressure-inducing element provides hydrostatic pressure, isotropic pressure or uniaxial pressure.

In some examples of the electrochemical cell, the cell maintains a pressure magnitude that varies by less than 20% across the electrode stack. In some examples of the electrochemical cell, the cell maintains a pressure magnitude that varies by less than 20% across a surface area of 100 µm² of the electrode stack. In some examples of the electrochemical cell, the cell maintains a pressure magnitude that varies by less than 20% across a surface area of 1,000 µm² of the electrode stack. In some examples of the electrochemical cell, the cell maintains a pressure magnitude that varies by less than 20% across a surface area of 10,000 µm² of the electrode stack.

In some examples of the electrochemical cell described herein, the electrochemical cell comprises one or more electrode stacks described herein, and the electrochemical cell is not pressurized.

In some examples, set forth herein is an electrochemical cell including one or more electrode stacks, an interlayer, an optional pressure inducing element, and an outer-shell material, wherein the electrode stack includes a lithium metal negative electrode, a solid-state electrolyte, and a positive electrode. In some of these examples, there is one stack in the electrochemical cell. In some other examples, there are 2, 3, 4, 5, or 6 lithium batteries in the electrochemical cell. In some other examples, there are 2 lithium batteries in the electrochemical cell. In some other examples, there are 2 lithium batteries in the electrochemical cell. In some other examples, there are 3 lithium batteries in the electrochemical cell. In some other examples, there are 4 lithium batteries in the electrochemical cell. In some other examples, there are 5 lithium batteries in the electrochemical cell. In some other examples, there are 6 lithium batteries in the electrochemical cell. In some examples, there are at least 50, or at least 75, or at least 100, or at least 125, or at least 150 lithium batteries in the electrochemical cell. In some examples, an lithium battery comprises about 1 to 200 electrochemical cells, about 10 to 150 electrochemical cells, or about 50 to 100 electrochemical cells.

In some examples, set forth herein is an electrochemical device including the electrochemical cell set forth herein. In some examples, the device is selected from a coin cell, a pouch cell, and a can cell. In certain examples, the device is a coin cell. In certain examples, the device is a pouch cell. In certain examples, the device is a can cell.

In some examples, set forth herein is an electrochemical device, including one or more electrode stacks, a pressure inducing element as described herein, an outer-shell material, and two conductive leads; wherein the electrode stack includes a lithium metal negative electrode, an interlayer, a solid-state electrolyte, and a positive electrode; wherein the pressure inducing material contacts the one or more electrode stacks and at least one surface of the outer-shell material; wherein one conductive lead is in electrical contact with the lithium metal negative electrode and one tab; and wherein a second conductive lead is in electrical contact with the positive electrode and one cell tab.

In some examples, set forth herein is a pressurized stack including an electrode stack: wherein the electrode stack includes: a lithium metal negative electrode, an interlayer, a solid-state electrolyte, and a positive electrode; wherein the stack maintains at least 50 % of the surface area of the solid electrolyte in contact with the lithium metal when discharged at a temperature of about 0 °C to about 150 °C and at a current density of about 0.1 mA/cm² to about 10 mA/cm².

In some examples, set forth herein is a pressurized electrochemical cell including an electrode stack wherein the electrode stack includes a lithium metal negative electrode, an interlayer, a solid-state electrolyte, and a positive electrode; wherein the pressurized electrochemical cell inhibits an increase in electrochemical cell's bulk interfacial resistance by more than a factor of 10 when discharged at a temperature of about 0 °C to about 150 °C and at a current density of about 0.1 mA/cm² to about 10 mA/cm².

In some examples, the pressurized electrochemical cell is an electrochemical cell set forth herein. In some examples, the cell maintains an isotropic pressure. In some examples, the isotropic pressure is 0-35 MPa (0-5000 psi). In some examples, the cell maintains a hydrostatic pressure. In some examples, the hydrostatic pressure is 0-35 MPa (0-5000 psi). In some examples, the cell maintains a uniaxial pressure. In some examples, the uniaxial pressure is 0-35 MPa (0-5000 psi).

In some additional examples, the solid-state electrolyte in an lithium battery or electrochemical cell described herein is selected from the group consisting of a lithium-stuffed garnet, a lithium sulfide, a lithium borohydride, a lithium oxide, a lithium carbonate, a lithium nitride, a lithium titanium aluminum phosphate, a lithium germanium aluminum phosphate, a lithium germanium titanium aluminum phosphate, OHARA glass, LIPON, NASICON, LISICON, and combinations thereof.

In some additional examples, the solid-state electrolyte is a lithium-stuffed garnet. In some examples, the solid-state electrolyte is a lithium sulfide. In some examples, the solid-state electrolyte is a lithium borohydride. In some examples, the solid-state electrolyte is a lithium oxide. In some examples, the solid-state electrolyte is a lithium carbonate. In some examples, the solid-state electrolyte is a lithium nitride. In some examples, the solid-state electrolyte is a lithium titanium aluminum phosphate. In some examples, the solid-state electrolyte is a lithium germanium aluminum phosphate. In some examples, the solid-state electrolyte is a lithium germanium titanium aluminum phosphate. In some examples, the solid-state electrolyte is a OHARA glass. In some examples, the solid-state electrolyte is LIPON. In some examples, the solid-state electrolyte is a NASICON, LISICON, and combinations thereof.

In some examples, the solid-state electrolyte includes at least two or more solid-state electrolytes in a layered configuration.

In some examples, the solid-state electrolyte includes a composite including a nonconducting polymer and a conducting ceramic phase. In some examples, the solid-state electrolyte further includes a polymer. In some examples, the solid-state electrolyte is swollen with a liquid or gel electrolyte.

In some examples, the solid-state electrolyte is a sintered solid-state electrolyte having a density from at least 95 % theoretical density to 100 % theoretical density.

In some examples, the lithium battery or the pressurized electrochemical cell described herein and comprising the interlayer, allows for maintenance of active surface area of the lithium metal negative electrode and/or delays a decrease in the active surface area of the lithium metal negative electrode , wherein the active surface area is the surface area of the lithium metal negative electrode which is in direct contact with the solid-state electrolyte. In some examples, the lithium battery or the electrochemical cell described herein and comprising the interlayer wherein the atomic% of zinc in the interlayer is less than 3.8 atomic%, allows for maintenance of active surface area of the lithium metal anode and/or delays a decrease in the active surface area of the lithium metal anode, without application of external pressure.

In some examples, the lithium battery or the pressurized electrochemical cell includes a port for conducting gases in and out of the electrochemical cell. In some examples, the electrochemical cell or the pressurized electrochemical cell further comprises a gel electrolyte.

In some examples set forth herein, the electrochemical cell maintains a pressure magnitude that varies by less than 20 % across the electrode stack. In some examples, the pressure magnitude varies by less than 19 % across the electrode stack. In some examples, the pressure magnitude varies by less than 18 % across the electrode stack. In some examples, the pressure magnitude varies by less than 17 % across the electrode stack. In some examples, the pressure magnitude varies by less than 16 % across the electrode stack. In some examples, the pressure magnitude varies by less than 15 % across the electrode stack. In some examples, the pressure magnitude varies by less than 14 % across the electrode stack. In some examples, the pressure magnitude varies by less than 13 % across the electrode stack. In some examples, the pressure magnitude varies by less than 12 % across the electrode stack. In some examples, the pressure magnitude varies by less than 11 % across the electrode stack. In some examples, the pressure magnitude varies by less than 10 % across the electrode stack. In some examples, the pressure magnitude varies by less than 9 % across the electrode stack. In some examples, the pressure magnitude varies by less than 9 % across the electrode stack. In some examples, the pressure magnitude varies by less than 7 % across the electrode stack. In some examples, the pressure magnitude varies by less than 6 % across the electrode stack. In some examples, the pressure magnitude varies by less than 5 % across the electrode stack. In some examples, the pressure magnitude varies by less than 4 % across the electrode stack. In some examples, the pressure magnitude varies by less than 3 % across the electrode stack. In some examples, the pressure magnitude varies by less than 2 % across the electrode stack. In some examples, the pressure magnitude varies by less than 1 % across the electrode stack. In some examples, this pressure magnitude variance is measured by using pressure paper in a mock-up assembly of the electrode stack.

In some examples, set forth herein is an electrochemical cell including one or more electrode stacks, a hydrostatic material, and an outer-shell material, wherein each of the one or more electrode stacks comprises a lithium metal negative electrode, an interlayer, a solid-state electrolyte, and a positive electrode; wherein the hydrostatic material contacts the one or more electrode stacks; wherein the hydrostatic material is contained by an outer-shell material; and wherein the bulk modulus of the outer-shell material is greater than the bulk modulus of the hydrostatic material.

In some examples, the cell maintains an isotropic pressure on the one or more stacks. In some examples, the isotropic pressure is between 0-35 MPa (0-5000 (psi)) gauge. In some examples, the cell maintains a hydrostatic pressure. In some examples, the hydrostatic pressure is between 0-35 MPa (0-5000 psi). In some examples, the hydrostatic pressure is applied via a gas. In some examples, the cell maintains a uniaxial pressure. In some examples, the uniaxial pressure is between 0-35 MPa (0-5000 psi). In some examples, the cell maintains a pressure magnitude that varies by less than 20% across the electrode stack. In some examples, the cell maintains a pressure magnitude that varies by less than 20% across a surface area of 100 µm² of the electrode stack. In some examples, the cell maintains a pressure magnitude that varies by less than 20% across a surface area of 1,000 µm² of the electrode stack. In some examples, the cell maintains a pressure magnitude that varies by less than 20% across a surface area of 10,000 µm² of the electrode stack. In some examples, the cell maintains a pressure magnitude that varies by less than 20% across a surface area of at least 1000 µm² of the electrode stack.

### D. METHOD OF USING

In some examples, set forth herein is a method of using the lithium batteries or the pressurized electrochemical cell set forth herein, the method including discharging the stack at a current density of about 0.01 mA/cm² to about 10 mA/cm² and at a temperature of about -30 °C to about 150 °C.

In some examples, including the above, the methods include maintaining at least 50 % of the active surface area of the lithium metal in contact with the interlayer or with the solid-state electrolyte, or with both the interlayer and the solid-state electrolyte. In some examples, the methods maintain 60% of the active surface area of the lithium metal in contact with the interlayer or with the solid-state electrolyte, or with both the interlayer and the solid-state electrolyte. In some examples, the methods maintain 70% of the active surface area of the lithium metal in contact with the interlayer or with the solid-state electrolyte, or with both the interlayer and the solid-state electrolyte. In some examples, the methods maintain 80% of the active surface area of the lithium metal in contact with the interlayer or with the solid-state electrolyte, or with both the interlayer and the solid-state electrolyte. In some examples, the methods maintain 90% of the active surface area of the lithium metal in contact with the interlayer or with the solid-state electrolyte, or with both the interlayer and the solid-state electrolyte. In some examples, the methods maintain 91% of the active surface area of the lithium metal in contact with the interlayer or with the solid-state electrolyte, or with both the interlayer and the solid-state electrolyte. In some examples, the methods maintain 92% of the active surface area of the active surface area of the lithium metal in contact with the interlayer or with the solid-state electrolyte, or with both the interlayer and the solid-state electrolyte. In some examples, the methods maintain 93% of the active surface area of the lithium metal in contact with the interlayer or with the solid-state electrolyte, or with both the interlayer and the solid-state electrolyte. In some examples, the methods maintain 94% of the active surface area of the lithium metal in contact with the interlayer or with the solid-state electrolyte, or with both the interlayer and the solid-state electrolyte. In some examples, the methods maintain 95% of the active surface area of the lithium metal in contact with the interlayer or with the solid-state electrolyte, or with both the interlayer and the solid-state electrolyte. In some examples, the methods maintain 96% of the active surface area of the lithium metal in contact with the interlayer or with the solid-state electrolyte, or with both the interlayer and the solid-state electrolyte. In some examples, the methods maintain 97% of the active surface area of the lithium metal in contact with the interlayer or with the solid-state electrolyte, or with both the interlayer and the solid-state electrolyte. In some examples, the methods maintain 98% of the active surface area of the lithium metal in contact with the interlayer or with the solid-state electrolyte, or with both the interlayer and the solid-state electrolyte. In some examples, the methods maintain 99% of the active surface area of the lithium metal in contact with the interlayer or with the solid-state electrolyte, or with both the interlayer and the solid-state electrolyte. The percent active surface area of lithium metal is measured by monitoring the change in area-specific resistance of the electrode or by capacitance measurement via EIS.

In some examples, the interlayer may be in a single layer after cycling of a cell described herein.

In some examples, the portions of the interlayer may be dispersed after cycling of a cell described herein. In some cases, particles of the metals of an interlayer may be dispersed, or in clusters, within a layer of lithium metal at top of charge.

In some examples, set forth herein is a method of using the lithium battery or the pressurized electrochemical cell set forth herein, including discharging the stack at a current density of about 0.01 mA/cm² to about 10 mA/cm² and at a temperature of about -30 °C to about 150 °C; and inhibiting an increase in the electrochemical cell or pressurized stack's interfacial resistance by more than a factor of 1.50.

In some examples, the methods include discharging the stack at a current density of at least 1 mA/cm². In some examples, the methods include discharging the stack at a current density of at least 2 mA/cm². In some examples, the methods include discharging the stack at a current density of at least 3 mA/cm². In some examples, the methods include discharging the stack at a current density of at least 4 mA/cm². In some examples, the methods include discharging the stack at a current density of at least 5 mA/cm². In some examples, the methods include discharging the stack at a current density of at least 6 mA/cm². In some examples, the methods include discharging the stack at a current density of at least 7 mA/cm². In some examples, the methods include discharging the stack at a current density of at least 8 mA/cm². In some examples, the methods include discharging the stack at a current density of at least 9 mA/cm². In some examples, the methods include discharging the stack at a current density of at least 10 mA/cm².

### E. METHODS OF MAKING

Provided herein is a process for making an lithium battery, comprising providing a solid-state separator thin film or pellet; depositing an interlayer on one side of the solid-state separator; providing a negative electrode current collector (NECC), wherein the interlayer is between the NECC and the solid-state separator. In some instances, the method further comprises applying pressure to the lithium battery that comprises the solid-state separator, interlayer, and NECC. In some examples, the solid-state separator is a thin film, In some examples, the solid-state separator is a pellet.

In some examples, including any of the foregoing, provided herein is a process for making an lithium battery, comprising: providing a solid-state electrolyte separator; depositing an interlayer on one side of the solid-state electrolyte separator; providing a negative electrode current collector (NECC), wherein the interlayer is between the NECC and the solid-state electrolyte separator; and applying pressure to the solid-state electrolyte separator, interlayer, and NECC.

In some examples, including any of the foregoing, provided herein is a process for making an lithium battery, comprising: providing a solid-state electrolyte separator; depositing an interlayer on one side of the solid-state separator; providing a negative electrode current collector (NECC), wherein the interlayer is between the NECC and the solid-state separator; and applying pressure to the solid-state separator, interlayer, and NECC. In some embodiments, the electrolyte separator is a thin film or a pellet. In some embodiments, the interlayer comprises zinc (Zn), tin (Sn), magnesium (Mg), silver (Ag), aluminum (Al), indium (In), bismuth (Bi), a lithium alloy thereof, oxides thereof, hydroxides thereof, peroxides thereof, and combinations thereof, wherein x and y are selected so the interlayer is charge neutral. In some embodiments, depositing an interlayer comprises using a roll of Zn foil. In some embodiments, depositing an interlayer comprises evaporating or sputtering Zn. In some embodiments, depositing an interlayer comprises evaporating Zn. In some embodiments, depositing an interlayer comprises sputtering Zn. In some embodiments, depositing an interlayer comprises depositing particles of metal or precursors to metal. In some embodiments, the particles are coated with a lithium lanthanum oxide, a lithium lanthanum zirconium oxide, a lithium-stuffed garnet, lithium titanium oxide, lithium niobium oxide, lithium zirconium oxide, lithium aluminum oxide, lithium tantalum oxide, lithium hafnium oxide, niobium oxide, zirconium oxide, aluminum oxide, silicon oxide, tantalum oxide, hafnium oxide, parylene, polypropylene, polyethylene, lithium carbonate, a glass, wherein the glass is selected from the group consisting of SiO₂-B₂O₃, and Al₂O₃, or combinations thereof. In some embodiments, the process further comprises heating the deposited particles of metal and/or precursors to metal.

In some examples, a precursor to a metal is a reagent which reacts to form a metal. For example, a metal halide may be used such that after depositing the metal halide, the metal halide reduces to a metal. For example, a metal oxide may be used such that after depositing the metal halide, the metal halide reduces to a metal. For example, a metal oxide may be used such that after depositing the metal halide, the metal halide reduces to a metal. For example, a metal sulfide may be used such that after depositing the metal halide, the metal halide reduces to a metal.

In one instance, depositing an interlayer comprises using a roll of Zn foil. In another instance, depositing an interlayer comprises evaporating or sputtering Zn. In another instance, depositing an interlayer comprises evaporating Zn. In another instance, depositing an interlayer comprises sputtering Zn. In yet another example, depositing an interlayer comprises coating particles of metal and/or metal precursors (e.g., zinc or zinc precursors) prior to deposition and then depositing those coated metal particles. In some of such instances, the particles are coated with a lithium lanthanum oxide, a lithium lanthanum zirconium oxide, a lithium-stuffed garnet, lithium titanium oxide, lithium niobium oxide, lithium zirconium oxide, lithium aluminum oxide, lithium tantalum oxide, lithium hafnium oxide, niobium oxide, zirconium oxide, aluminum oxide, silicon oxide, tantalum oxide, hafnium oxide, parylene, polypropylene, polyethylene, lithium carbonate, or a glass, wherein the glass is selected from the group consisting of SiO₂-B₂O₃, and Al₂O₃, or a combination thereof.

In some embodiments, including any of the foregoing embodiments, the interlayer particles have a coating selected from the group consisting of parylene, polypropylene, polyethylene, alumina, Al₂O₃, ZrO₂, TiO₂, SiO₂, a binary oxide, La₂Zr₂O₇, a lithium carbonate species, and a glass, wherein the glass is selected from SiO₂-B₂O₃, or Al₂O₃. In some embodiments, the coating is parylene. In some embodiments, the coating is polypropylene. In some embodiments, the coating is polyethylene. In some embodiments, the coating is alumina. In some embodiments, the coating is Al₂O₃. In some embodiments, the coating is ZrO₂. In some embodiments, the coating is TiO₂. In some embodiments, the coating is SiO₂. In some embodiments, the coating is a binary oxide. In some embodiments, the coating is La₂Zr₂O₇. In some embodiments, the coating is a lithium carbonate species. In some embodiments, the coating is a glass. In some embodiments, the coating is lithium lanthanum oxide. In some embodiments, the coating is a lithium lanthanum zirconium oxide. In some embodiments, the coating is a lithium-stuffed garnet. In some embodiments, the coating is lithium titanium oxide. In some embodiments, the coating is lithium niobium oxide. In some embodiments, the coating is lithium zirconium oxide. In some embodiments, the coating is lithium aluminum oxide. In some embodiments, the coating is lithium tantalum oxide. In some embodiments, the coating is lithium hafnium oxide. In some embodiments, the coating is niobium oxide. In some embodiments, the coating is zirconium oxide. In some embodiments, the coating is hafnium oxide. In some embodiments, including any of the foregoing embodiments, the interlayer particles have a coating selected from the group consisting of parylene, polypropylene, and polyethylene.

In some instances, depositing an interlayer further comprises heating the deposited coated particles of metal and/or metal precursors. In some of such instances, the zinc (Zn), zinc oxide, or a lithium-zinc alloy, LiₓZn_{y}, wherein 0<x≤1 and 0<y≤1, or oxides thereof, or hydroxides thereof, or peroxides thereof, and/or combinations thereof, are suspended in a solvent and/or a polymer to obtain a mixture, the mixture is sprayed on a SSE film or pellet, and after spraying of the mixture, the solvent is evaporated and/or the polymer is removed by heating. In an example, the interlayer comprises zinc. In another example, the interlayer comprises a lithium-zinc alloy.

In some instances, provided herein are methods for making the lithium batteries or electrochemical cells described above, wherein, in a first step, an interlayer is stacked on top of, laminated to, or cast or deposited on a solid-state electrolyte. In a second step, lithium metal is laminated to or deposited on the interlayer. In a third step, a positive electrode is deposited on the solid-state electrolyte on the face opposite the face in direct contact with the interlayer. These steps result in an electrode stack described herein. In some examples, the lithium metal anode is plated upon the first charge. In some examples, a further electrolyte, e.g., a gel electrolyte is placed between a positive electrode and the solid-state electrolyte.

In another aspect, a method for making an lithium battery comprises providing a solid-state separator thin film or pellet; providing an interlayer that is adjacent to the negative electrode current collector to form a bilayer, and depositing the interlayer/negative electrode current collector bilayer on one side of the solid-state separator. The interlayer may be first deposited onto the negative electrode current collector via lamination, casting, deposition, vaporization, or other methods. The interlayer and negative electrode current collector may form a bilayer that is then stacked or placed adjacent to the other components in the lithium battery.

In some cases, when the negative electrode current collector is a foil of a thin layer of metal, the interlayer may be first deposited onto the negative electrode current collector via lamination, casting, deposition, vaporization, or other methods. In some cases, a metal, such as aluminum or zinc, may be evaporated onto a foil. In some cases, a metal, such as aluminum or zinc, may be sputtered onto a foil.

The interlayer and negative electrode current collector is then placed into contact with the remaining components of the lithium battery.

The present disclosure provides a method wherein the zinc interlayer is deposited as a foil. In additional embodiments, the zinc interlayer is deposited by preparing a colloidal mixture (suspension or emulsion, or solution) of metal and/or metal precursors in a suitable solvent, then depositing (e.g., spraying or casting) the mixture on the solid-state electrolyte and evaporating the solvent. The metal and/or metal precursors may be coated or uncoated particles as described herein.

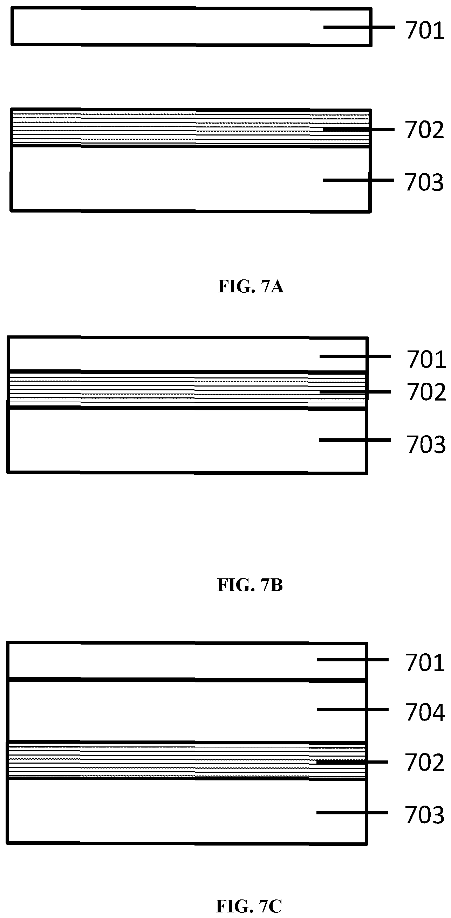

FIGs. 7A-7C illustrate the assembly and cycling behavior of an interlayer that has been deposited on an electrolyte separator. For illustration purposes, only three layers of a full cell are shown in these figures. The full cell may comprise other layers or components, such as a cathode, a positive current collector, or a cell housing unit. As shown in FIG. 7A, interlayer 702 has been deposited onto electrolyte separator 703. As shown in FIG. 7B, negative electrode current collector 701 is assembled adjacent to interlayer 702. After charging of the full cell, a layer of lithium 704 is plated between the negative electrode current collector 701 and the interlayer 702, as shown in FIG. 7C.

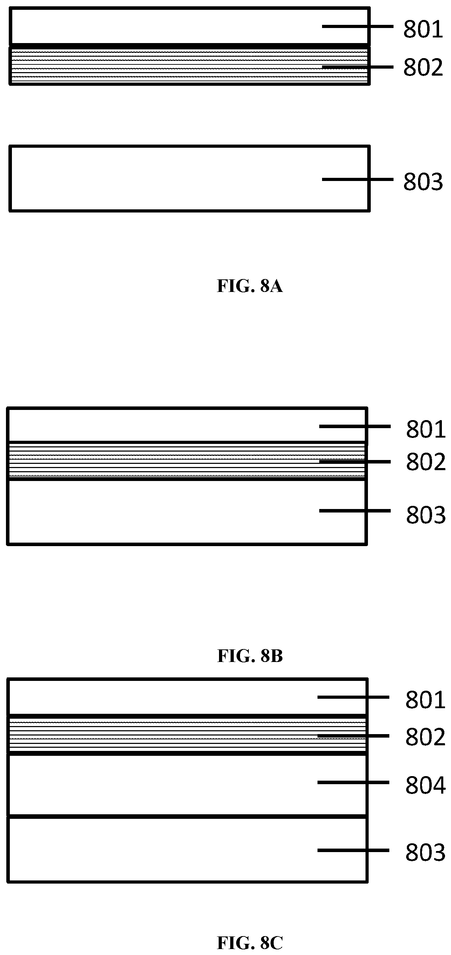

FIGs. 8A-8C illustrate the assembly and cycling behavior of an interlayer that has been deposited on a negative electrode current collector. For illustration purposes, only three layers of a full cell are shown in these figures. The full cell may comprise other layers or components, such as a cathode, a positive current collector, or a cell housing unit. As shown in FIG. 8A, interlayer 802 has been deposited onto negative electrode current collector 801.

As shown in FIG. 8B, electrolyte separator 803 is assembled adjacent to interlayer 802. After charging of the full cell, a layer of lithium 804 is plated between the interlayer 802 and electrolyte separator 803, as shown in FIG. 8C.

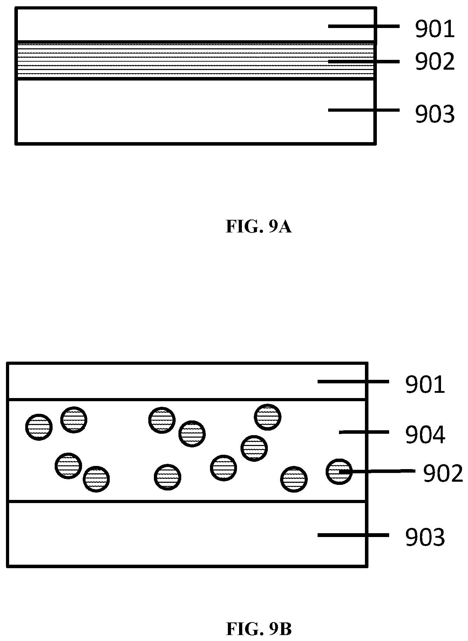

FIGs. 9A-9B illustrate the behavior of a seed layer after multiple cycles. For illustration purposes, only three layers of a full cell are shown in these figures. The full cell may comprise other layers or components, such as a cathode, a positive current collector, or a cell housing unit. FIG. 9A shows a negative electrode current collector 901 adjacent to an interlayer 902, which is also adjacent to an electrolyte separator 903. After charging of the full cell, a layer of lithium 904 is plated out with pockets or regions of the interlayer 902 within the layer of lithium, as shown in FIG. 9B.

### F. EXAMPLES

### EXAMPLE 1 - AS AN ILLUSTRATIVE EXAMPLE ONLY AND NOT ENCOMPASSED BY THE PRESENT CONCEPT; MAKING AND TESTING AN ELECTROCHEMICAL CELL WITH AN INTERLAYER

**Preparing a test cell without an interlayer (Control).** A test symmetric electrochemical cell, which included lithium metal on both sides of a lithium-stuffed garnet solid-state electrolyte pellet, was prepared. The electrochemical cell was prepared by providing a lithium-stuffed garnet sintered pressed-powder pellet that was approximately 1000 µm thick and 1.1 cm in diameter. 2 g of powder having the composition Li₇La₃Zr₂O₁₂(0-1)Al₂O₃ was milled, placed in a pressing dye, and pressed at 35 - 69 MPa (5,000 - 10,000 psi) in a hydraulic press at a temperature of 800-1200 °C. 4 µm thick Li metal was evaporated on one side (top), and 45 µm thick Li metal was evaporated on the other side (bottom) of the lithium-stuffed garnet solid-state electrolyte pellet. The Li metal on the top was 0.8 mm in diameter. The Li metal on the bottom was 8 mm in diameter.

**Preparing a test cell with an interlayer (Cell 1).** An asymmetric electrochemical cell, which included lithium metal on both sides of a lithium-stuffed garnet solid-state electrolyte pellet, but with a Zn-containing interlayer between the lithium-stuffed garnet solid-state electrolyte pellet and the lithium metal on one side was prepared. The electrochemical cell was prepared by providing a lithium-stuffed garnet sintered pressed-powder pellet that was 1000 µm thick and 1.1 cm in diameter. 2 g of powder having the composition Li₇La₃Zr₂O₁₂(0-1)Al₂O₃ was milled, placed in a pressing dye, and pressed at 35-69 MPa (5,000 - 10,000 psi)in a hydraulic press at a temperature of 800-1200 °C. 100 nm of Zn, having 0.8 mm diameter, was evaporated onto one side (top) of the lithium-stuffed garnet pellet. 4 µm, having 0.8 mm diameter, thick Li metal was evaporated onto the 100 nm Zn layer. 45 µm thick Li metal was evaporated on the other side (bottom) of the lithium-stuffed garnet solid-state electrolyte pellet. The Li metal on the top was 0.8 mm in diameter. The Li metal on the bottom was 8 mm in diameter.

A bias was applied at 45 °C to conduct 1mA/cm² Li⁺ current density through the control cell. A bias was applied at 45 °C to conduct 1mA/cm² Li⁺ current density through the cell 1. Current flowed from the 8 mm electrode to the 0.8 mm electrode. The results of these tests are overlaid in FIG. 2.

FIG. 2 shows a plot of the test cell voltage vs time when applying a 1mA/cm² current density to strip Li at 45 °C. Gray circles are control cells without seed layer. The control cell shows earlier onset of area specific resistance growth *(i.e.,* impedance) as indicated by an earlier in time rise in voltage (V) compared to a cell with an interlayer.

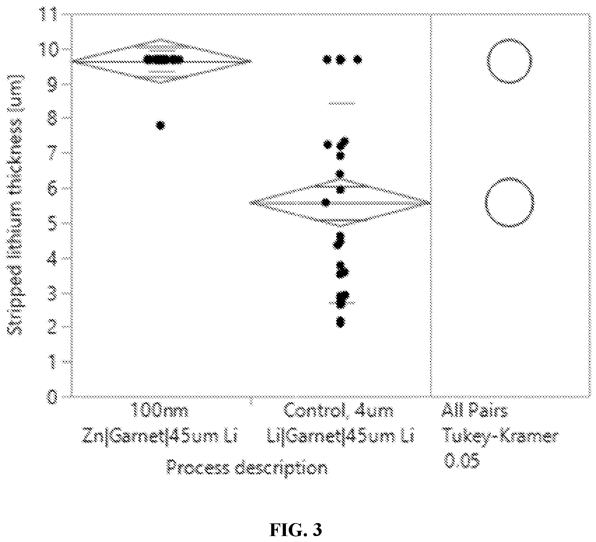

FIG. 3 shows the amount of Li stripped from the bottom electrode before the impedance rises too high to strip further under no external pressure at 45 °C at a current density of 1mA/cm². The statistical difference between the amount of lithium stripped from the bottom electrode in the presence and absence (control) of a Zn interlayer shows that adding a Zn interlayer allows for more lithium to flow from the metal electrode into the solid-state electrolyte before failure than without adding the Zn interlayer. This indicates that the metal anode and solid-state separator are in contact longer, even at low pressure, when using the Zn interlayer than when not using the Zn interlayer.

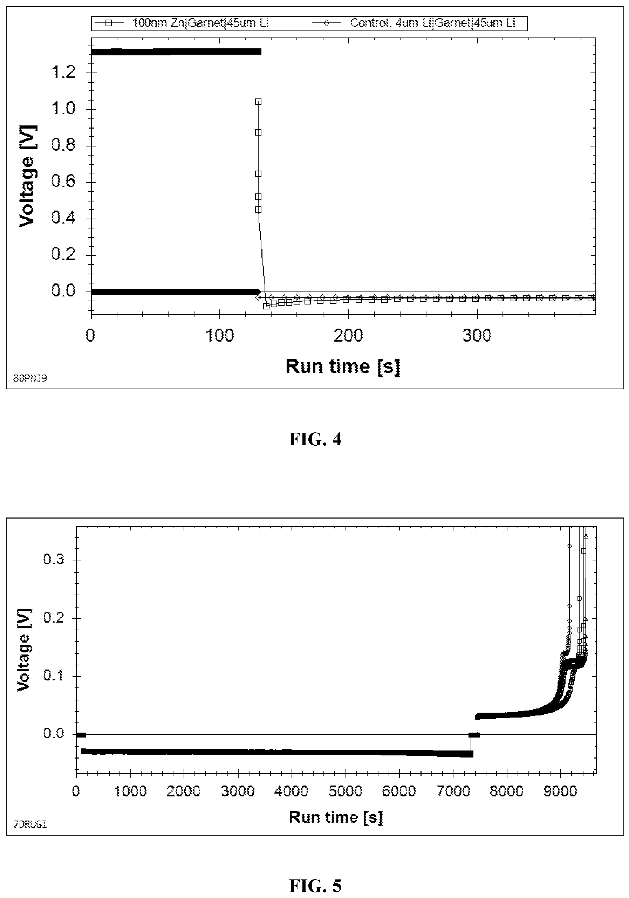

FIG. 4 shows a plot of voltage v. time for a control cell (no interlayer) and a cell with a Zn interlayer. The initial open-circuit voltage (OCV) was affected by the potential difference due to the presence of the LiZn interlayer. Without being bound by any theory, it is believed that the open-circuit voltage (OCV) difference indicates a potential for lateral lithium redistribution, thereby allowing for the stripping to occur for longer periods of time.

### EXAMPLE 2 - AS AN ILLUSTRATIVE EXAMPLE ONLY AND NOT ENCOMPASSED BY THE PRESENT CONCEPT; IDENTIFYING AN INTERLAYER METAL

A series of tests were conducted to identify candidate metals for the interlayer.

One test included determining the adhesion ability of the metal to the surface of lithium-stuffed garnet. A thin (~100 nm thick) metal seed layer was deposited onto clean garnet surfaces by physical vapor deposition (PVD). Lithium foils were pressed onto the seed layer with finger pressure. Then a tweezer was used to peel/push the lithium foil off. The results are summarized below.

**Table 1**

| **Metal Seed layer** | **Garnet-metal adhesion (peel test)** | **Li-M alloy adhesion (peel test)** | **Electrical tests (no external pressure)** |
|---|---|---|---|
| Bi (100 nm) | Poor | Good | Electrical data shows poor performance |
| Zn (100 nm) | Good | Good | Electrical data shows slower ASR growth |

### EXAMPLE 3 - AS AN ILLUSTRATIVE EXAMPLE ONLY AND NOT ENCOMPASSED BY THE PRESENT CONCEPT; MAKING AND TESTING AN ELECTROCHEMICAL CELL WITH AN INTERLAYER

**Preparing a test cell with an interlayer (Cell 2).** An asymmetric electrochemical cell, which included lithium metal on both sides of a lithium-stuffed garnet solid-state electrolyte pellet, but with a Zn-containing interlayer between the lithium-stuffed garnet solid-state electrolyte pellet and the lithium metal on one side was prepared. The electrochemical cell was prepared by providing a lithium-stuffed garnet sintered pressed-powder pellet that was 1000 µm thick and 1.1 cm in diameter. 1g of powder having the composition Li₇La₃Zr₂O₁₂(0-1)Al₂O₃ was milled, placed in a pressing dye, and pressed at 35-69 MPa (5,000-10,000 psi) in a hydraulic press at 800-1200 °C. 100 nm of Zn, having 0.8 mm diameter, was evaporated onto one side (top) of the lithium-stuffed garnet pellet. 4 µm, having 0.8 mm diameter, thick Li metal was evaporated onto the 100 nm Zn layer. 45 µm thick Li metal was evaporated on the other side (bottom) of the lithium-stuffed garnet solid-state electrolyte pellet. The Li metal on the top was 0.8 mm in diameter. The Li metal on the bottom was 8 mm in diameter. The results of electrochemically testing this cell are shown in FIG. 5.

As shown in FIG. 5, initially, 10 µm of Li was plated from the bottom electrode (without the Zn interlayer) to top electrode (with the Zn interlayer) at 1 mA/cm² at 45 °C. This resulted in a 14 µm layer of Li on the top electrode on top of the 100 nm Zn interlayer, which was about 3.1 atomic % Zn assuming full alloying with the remaining 96.9 atomic % being lithium. When Li was stripped from the top electrode at 1 mA/cm² at 45 °C without pressure, about 2.5 µm Li was accessed before the voltage raised, likely due to an increase in area-specific resistance (ASR) at the interface of the Li metal and the solid-state electrolyte. At this stage, the amount of Zn in the interlayer is about 3.8 atomic % Zn. The voltage shows a plateau at ~0.11 V, which corresponds to a LiZn alloy being formed.

### EXAMPLE 4 - DETERMINATION OF CONTACT ANGLE

The surface of Li metal wire supplied by Rockwood Lithium was mechanically removed in an Ar glovebox after purging for 15 minutes. The remaining lithium was loaded into a 304 stainless steel syringe with a 22G stainless steel blunt needle. The sample was placed on a stage beneath the syringe and both syringe and stage were heated to 200 °C. The plunger of the syringe was depressed and the first molten Li drop was dispensed onto Ni foil. A sessile drop was generated by dispensing ~5 µL of Li onto the sample and an image of the drop silhouette was captured using a Kyowa DMo-701 contact angle meter. The contact angle is measured by the FAMAS software developed by Kyowa. Test parameters: Atmosphere: Ar glovebox, 15 minute pre-measurement purge; Temperature: 200°C; Drop volume: 2-10 µL. Tools: Kyowa DMo-701 contact angle meter; Kyowa Heater type dispenser; Kyowa Heater type stage. FIG. 6 shows contact angle measurements for Lithium drops on different metal samples. As shown in FIG. 6, a coating comprising bismuth results in a contact angle of between about 120 ° and 160 °, a geranium coating results in a contact angle of about 100 °, a gold coating results in a contact angle of between about 60 ° and 80 °, and a zinc coating results in a contact angle of around 20 °. In this example, the contact angle with an evaporated zinc layer is the smallest amongst the samples.

### EXAMPLE 5 - MAKING AND TESTING A FULL CELL WITH A SPUTTERED ZINC INTERLAYER

In a sputtering tool, a base pressure of less than 1 mPa (1 x 10⁻⁵ Torr) was achieved. Argon gas was then filled into the tool to achieve a pressure of about 0.27 Pa (2 x 10⁻³ Torr). Zinc metal was deposited onto thin film garnet electrolyte separators for 30 minutes at 60 W. The layer of zinc averaged approximately 400 nm thick. A cool down period of at least 15 minutes was taken before venting the chamber.

A full cell was assembled, comprising a circular, 100 µm thick garnet separator with a diameter of 11 mm, a nickel manganese cobalt cathode with an active mass loading of 90 % by weight, a zinc interlayer, and a negative electrode current collector. A formation cycle was performed, followed by cycling at 1C. The cell was cycled within a voltage range of 3.0 V to 4.2 V at 350 kPa (50 psi) force and at 30 °C.

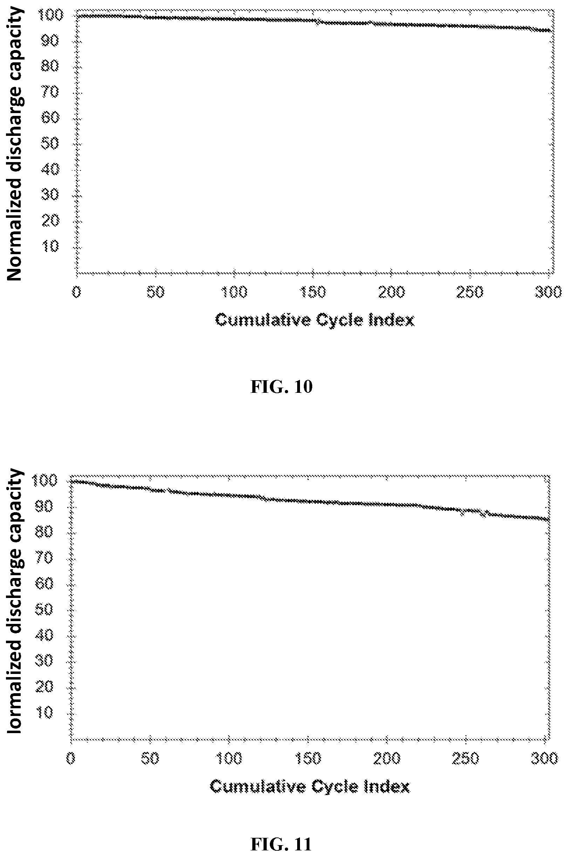

FIG. 10 shows the full cell data for the cell. As seen in FIG. 10, the normalized discharge capacity decreases by about 6% over 300 cycles of the full cell.

### EXAMPLE 6 - MAKING AND TESTING A FULL CELL WITH A SPUTTERED ZINC INTERLAYER

A layer of zinc, averaging approximately 400 nm thick, was sputtered onto 11 µm thick nickel foil. A full cell was assembled, comprising a circular, 100 µm thick garnet separator with a diameter of 11 mm, a nickel manganese cobalt cathode with an active mass loading of 90 % by weight, the zinc interlayer on the nickel foil and a negative electrode current collector. A formation cycle was performed, followed by cycling at 1C. The cell was cycled within a voltage range of 3.0 V to 4.2 V at 350 kPa (50 psi) force and at 30 °C.

The full cell was then cycled. FIG. 11 shows the full cell data for the cell. As seen in FIG. 11, normalized discharge capacity decreases by about 15% over 300 cycles of the full cell.

### EXAMPLE 7 - AS AN ILLUSTRATIVE EXAMPLE ONLY AND NOT ENCOMPASSED BY THE PRESENT CONCEPT; MAKING AND TESTING A FULL CELL WITH A THERMALLY EVAPORATED ALUMINUM INTERLAYER

A thermal evaporation system was used to deposit an aluminum interlayer on a thin film garnet electrolyte separator. The aluminum interlayer was approximately 60 nm thick. A pressure of less than 1 mPa (1 x 10⁻⁵ Torr) was achieved in the evaporation chamber. An alumina-coated tungsten crucible was used with 6.35 mm (0.25 inch) pellets of aluminum. The power of the evaporation system was ramped to 32% power for 10 minutes, then held for 5 minutes. A second ramp to 37% power was held for 2 minutes. A deposition rate of 5A/s was maintained. A cool down period of at least 15 minutes was taken before the chamber was vented.

A full cell was assembled, comprising a circular, 100 µm thick garnet separator with a diameter of 11 mm, a nickel manganese cobalt cathode with an active mass loading of 90 % by weight, the aluminum interlayer and a negative electrode current collector. A formation cycle was performed, followed by cycling at 1C. The cell was cycled within a voltage range of 3.0 V to 4.2 V at 350 kPa (50 psi) force and at 30°C.

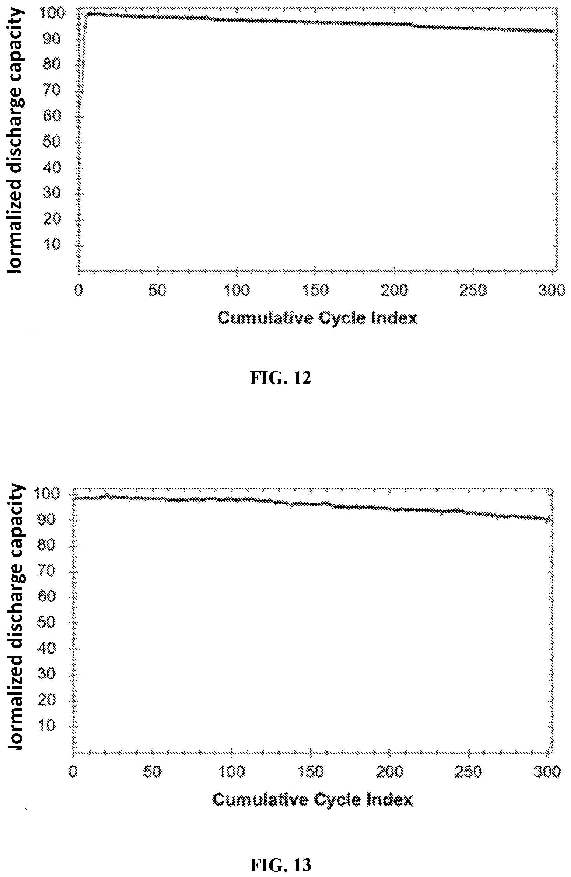

The full cell was then cycled. FIG. 12 shows the full cell data for the cell. As seen in FIG. 12, the normalized discharge capacity decreases by about 7% over 300 cycles of the full cell.

### EXAMPLE 8 - AS AN ILLUSTRATIVE EXAMPLE ONLY AND NOT ENCOMPASSED BY THE PRESENT CONCEPT; MAKING AND TESTING A FULL CELL WITH AN ALUMINUM INTERLAYER

Aluminum was evaporated onto 11 µm thick nickel foil. The aluminum layer was approximately 500 nm thick on average.

A full cell was assembled, comprising a circular, 100 µm thick garnet separator with a diameter of 11 mm, a nickel manganese cobalt cathode with an active mass loading of 90 % by weight, the aluminum interlayer on the nickel foil and a negative electrode current collector. A formation cycle was performed, followed by cycling at 1C. The cell was cycled within a voltage range of 3.0 V to 4.2 V at 350 kPa (50 psi) force and at 30 °C.

The full cell was then cycled. FIG. 13 shows the full cell data for the cell. As seen in FIG. 13, the normalized discharge capacity decreases by about 10% over 300 cycles of the full cell.

### EXAMPLE 9 - MAKING AND TESTING A FULL CELL WITH A THERMALLY EVAPORATED TIN INTERLAYER

Tin was evaporated onto solid-state separators in accordance to the method of Example 7 and the resulting full cells were tested in terms of survival of cycle 1 at 350 kPa (50 psi), 30 °C, and a 1C rate.

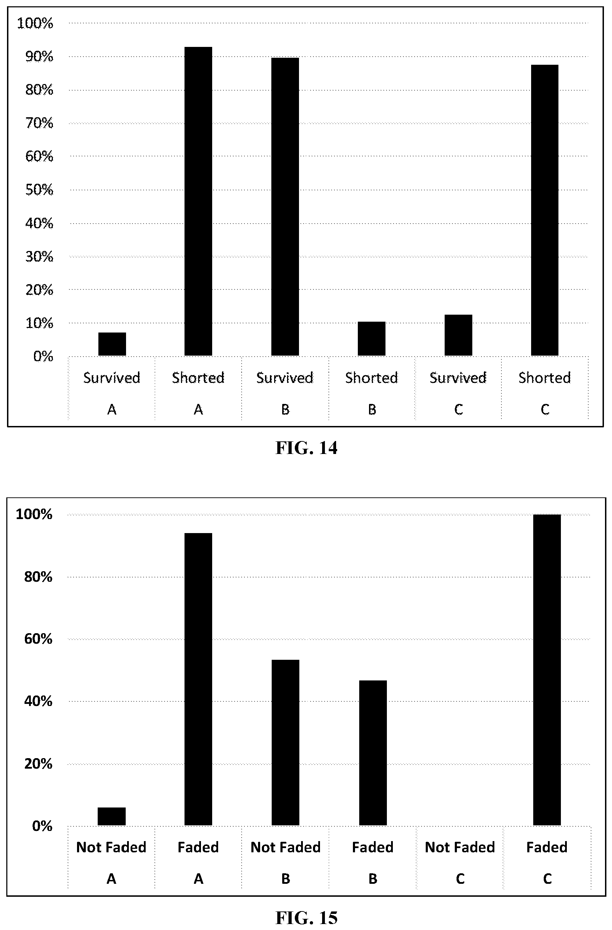

Various thicknesses of tin layers were tested. The results of 78 cells are plotted in FIG. 14, wherein the cells are separated into three groups by the thickness of the evaporated tin layer:
A = 1-199 nm thickness
B = 200-399 nm thickness
C = 400-799 nm thickness

As shown in FIG. 14, greater than 90% of cells with a thickness of 1-199 nm of tin shorted within cycle 1 and greater than 80% of cells with a thickness of 400-799 nm of tin shorted within cycle 1. In contrast, 90% of cells with a tin layer thickness of 200-399 nm survived a charge and discharge cycle.

### EXAMPLE 10 - MAKING AND TESTING A FULL CELL WITH A THERMALLY EVAPORATED ZINC INTERLAYER

Zinc was evaporated onto solid-state separators in accordance to the method of Example 7 and the resulting full cells were tested at 350 kPa (50 psi) force, 30 °C, and a 1C rate, and observed for significant amounts of capacity fade over the cycle life of the cells.

Various thicknesses of zinc layers were tested. The results of 242 cells are plotted in FIG. 15, wherein the cells are separated into three groups by the thickness of the evaporated zinc layer:
A = 1-299 nm thickness
B = 300-699 nm thickness
C = 700-1899 nm thickness

As shown in FIG. 15, more than 90% of cells in group A exhibited rapid capacity fade. In group C, 100% of cells exhibited rapid capacity fade. In contrast, cells in group B, wherein the zinc layer had a thickness of between 300-699 nm, about 50% of the cells exhibited rapid capacity fade.

### EXAMPLE 11 - AS AN ILLUSTRATIVE EXAMPLE ONLY AND NOT ENCOMPASSED BY THE PRESENT CONCEPT; MAKING AND TESTING A FULL CELL WITH A THERMALLY EVAPORATED ALUMINUM INTERLAYER

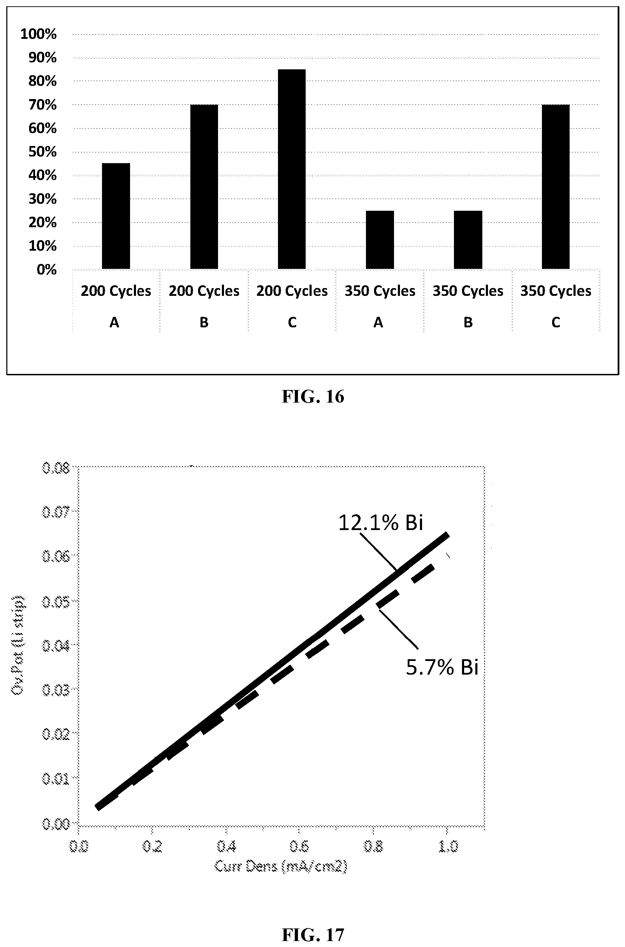

Aluminum was evaporated onto solid-state separators in accordance to the method of Example 7. The resulting full cells were tested at 350 kPa (50 psi) force, 30 °C, and a 1C rate and the survival rate of those cells at 200 cycles and 350 cycles are plotted in FIG. 16. Various thicknesses of aluminum layers were tested. The results of more than 80 cells are plotted in FIG. 16, wherein the cells are separated into three groups by the thickness of the evaporated aluminum layer:
A = 1-99 nm thickness
B = 100-399 nm thickness
C = 400-699 nm thickness

As shown in FIG. 16, the survival rate at 200 cycles is highest in group C, followed by group B, followed by group A, wherein cells had about a 40% survival rate. At 350 cycles, 70% of cells were still cycling, whereas only 25% of cells in group A and group B were still cycling.

### EXAMPLE 12 - AS AN ILLUSTRATIVE EXAMPLE ONLY AND NOT ENCOMPASSED BY THE PRESENT CONCEPT; MAKING AND TESTING AN ASSYMETRIC CELL WITH A BISMUTH INTERLAYER

A garnet pellet 1000 µm thick and 1.1 cm in diameter was made via the following method: 2 g of powder having the composition Li₇La₃Zr₂Oi₂(0-1)Al₂O₃ was milled, placed in a pressing dye, and pressed at 35 - 69 MPa (5,000 - 10,000 psi) in a hydraulic press at a temperature of 800-1200 °C. An asymmetric architecture was made comprising, in order, a 2 µm thick layer a lithium, a 1 mm garnet pellet, 2 µm of evaporated bismuth, and 0.2 µm of evaporated lithium. The total impedance of two cells, comprising 5.7% bismuth and 12.1% bismuth, was calculated to be 121 Ohms and 131 Ohms, respectively, at 80 °C. The percentage of bismuth is the atomic percentage of bismuth within the bismuth and lithium layers on the same side of the garnet pellet. This data is shown in FIG. 17. In comparison, the total impedance of standard lithium-lithium cells is between 88 - 105 Ohm.

## Claims

1. A lithium battery comprising:
a negative electrode current collector (NECC);
a solid-state electrolyte separator; and
an interlayer between the NECC and the electrolyte separator;
wherein the interlayer comprises zinc (Zn) having a thickness of between 300-699 nm; or tin (Sn) having a thickness of 300-350 nm or 350-399 nm.

2. The lithium battery of claim 1, wherein the electrolyte separator is a thin film or a pellet.

3. The lithium battery of any preceding claim, wherein the interlayer further comprises an oxygen-containing compound.

4. The lithium battery of any preceding claim, further comprising a Li metal negative electrode between and in direct contact with the NECC and the interlayer, wherein the interlayer is between and in direct contact with the lithium metal negative electrode and the electrolyte separator.

5. The lithium battery of any preceding claim, wherein the electrolyte separator comprises lithium-stuffed garnet.

6. The lithium battery of claim 5, wherein the lithium-stuffed garnet comprises Li_{A}La_{B}M'_{c}M"_{D}Zr_{E}O_{F}, wherein 4<A<8.5, 1.5<B<4, 0≤C≤2, 0≤D≤2; 0≤E≤2.5, 10<F≤13; and M' and M" are each, independently in each instance selected, from the group consisting of Al, Mo, W, Nb, Sb, Ca, Ba, Sr, Ce, Hf, Rb, Ga, and Ta; wherein the lithium-stuffed garnet comprises Li_{J}La_{K}Zr_{L}O_{M}·yAl₂O₃; wherein 5≤J≤8, 2≤K≤5, 0≤L≤3, 10≤M≤13, and 0≤y≤1; or wherein the lithium-stuffed garnet comprises LiₓLa₃Zr_{z}O₁₂·yAl₂O₃, wherein 5≤x≤8, 0≤y≤1, and 0<z≤2.5.

7. The lithium battery of any one of claims 4-6, wherein the interlayer and the lithium metal negative electrode comprise 99.9%-95% lithium by mole and 0.1% - 5% zinc by mole; or wherein the interlayer further comprises at least one member selected from the group consisting of Al, Au, Ag, Bi, Cr, Ge, Sb, Si, Ti, a lithium alloy thereof, oxides thereof, hydroxides thereof, peroxides thereof, and combinations thereof.

8. The lithium battery of any preceding claim, wherein the interlayer decreases the contact angle of liquid lithium metal, when liquid lithium metal is placed in contact with the interlayer compared to when liquid lithium metal is placed in contact with the electrolyte separator.

9. The lithium battery of any preceding claim, wherein the NECC comprises a material selected from the group consisting of carbon (C)-coated nickel (Ni), nickel (Ni), copper (Cu), aluminum (Al), stainless steel, and combinations thereof.

10. The lithium battery of any preceding claim, wherein the electrolyte separator is a thin film and the thickness of the thin film is from 0.1 µm to 200 µm.

11. An electrochemical cell comprising a lithium battery of any one of claims 1-10, wherein a pressure in the electrochemical cell is at least 68.9 kPa (10 psi).

12. The electrochemical cell of claim 11, wherein a pressure in the electrochemical cell is at least 689 kPa (100 psi); or wherein a pressure in the electrochemical cell is lower than 2068 kPa (300 psi).

## Patentansprüche

1. Eine Lithiumbatterie, die Folgendes beinhaltet:
einen Negativelektroden-Stromkollektor (NECC);
einen Festkörperelektrolytseparator; und
eine Zwischenschicht zwischen dem NECC und dem Elektrolytseparator;
wobei die Zwischenschicht Zink (Zn) mit einer Dicke zwischen 300 und 699 nm oder Zinn (Sn) mit einer Dicke von 300-350 nm oder 350-399 nm beinhaltet.

2. Lithiumbatterie gemäß Anspruch 1, wobei der Elektrolytseparator ein Dünnfilm oder ein Pellet ist.

3. Lithiumbatterie gemäß einem vorhergehenden Anspruch, wobei die Zwischenschicht ferner eine sauerstoffhaltige Verbindung beinhaltet.

4. Lithiumbatterie gemäß einem vorhergehenden Anspruch, die ferner eine Li-Metall-Negativelektrode zwischen und in direktem Kontakt mit dem NECC und der Zwischenschicht beinhaltet, wobei sich die Zwischenschicht zwischen und in direktem Kontakt mit der Lithiummetall-Negativelektrode und dem Elektrolytseparator befindet.

5. Lithiumbatterie gemäß einem vorhergehenden Anspruch, wobei der Elektrolytseparator lithiumgefüllten (lithium-stuffed) Granat beinhaltet.

6. Lithiumbatterie gemäß Anspruch 5, wobei der lithiumgefüllte Granat Li_{A}La_{B}M'_{c}M"_{D}Zr_{E}O_{F} beinhaltet, wobei 4 < A < 8,5, 1,5 < B < 4, 0 ≤ C ≤ 2, 0 ≤ D ≤ 2; 0 ≤ E ≤ 2,5, 10 < F ≤ 13; und M' und M" jeweils und in jedem Fall unabhängig aus der Gruppe ausgewählt sind, die aus Al, Mo, W, Nb, Sb, Ca, Ba, Sr, Ce, Hf, Rb, Ga und Ta besteht; wobei der lithiumgefüllte Granat Li_{J}la_{K}Zr_{L}O_{M}·yAl₂O₃ beinhaltet; wobei 5 ≤ J ≤ 8, 2 ≤ K ≤ 5, 0 ≤ L ≤ 3, 10 ≤ M ≤ 13 und 0 ≤ y ≤ 1; oder wobei der lithiumgefüllte Granat LiₓLa₃Zr_{z}O₁₂·yAl₂O₃ beinhaltet, wobei 5 ≤ x ≤ 8, 0 ≤ y ≤ 1 und 0 < z ≤ 2,5.

7. Lithiumbatterie gemäß einem der Ansprüche 4-6, wobei die Zwischenschicht und die Lithiummetall-Negativelektrode 99,9 Mol-% bis 95 Mol-% Lithium und 0,1 Mol-% bis 5 Mol-% Zink beinhalten; oder wobei die Zwischenschicht ferner mindestens eine Komponente beinhaltet, das aus der Gruppe ausgewählt ist, die aus Al, Au, Ag, Bi, Cr, Ge, Sb, Si, Ti, einer Lithiumlegierung davon, Oxiden davon, Hydroxiden davon, Peroxiden davon und Kombinationen davon besteht.

8. Lithiumbatterie gemäß einem vorhergehenden Anspruch, wobei die Zwischenschicht den Kontaktwinkel von flüssigem Lithiummetall verringert, wenn flüssiges Lithiummetall mit der Zwischenschicht in Kontakt gebracht wird, im Vergleich dazu, wenn flüssiges Lithiummetall mit dem Elektrolytseparator in Kontakt gebracht wird.

9. Lithiumbatterie gemäß einem vorhergehenden Anspruch, wobei der NECC ein Material beinhaltet, das aus der Gruppe ausgewählt ist, die aus mit Kohlenstoff (C) beschichtetem Nickel (Ni), Nickel (Ni), Kupfer (Cu), Aluminium (Al), nichtrostendem Stahl und Kombinationen davon besteht.

10. Lithiumbatterie gemäß einem vorhergehenden Anspruch, wobei der Elektrolytseparator ein Dünnfilm ist und die Dicke des Dünnfilms 0,1 µm bis 200 µm beträgt.

11. Eine elektrochemische Zelle, die eine Lithiumbatterie gemäß einem der Ansprüche 1-10 beinhaltet, wobei ein Druck in der elektrochemischen Zelle mindestens 68,9 kPa (10 psi) beträgt.

12. Elektrochemische Zelle gemäß Anspruch 11, wobei ein Druck in der elektrochemischen Zelle mindestens 689 kPa (100 psi) beträgt; oder wobei ein Druck in der elektrochemischen Zelle weniger als 2068 kPa (300 psi) beträgt.

## Revendications

1. Une batterie au lithium comprenant :
un collecteur de courant d'électrode négative (NECC) ;
un séparateur électrolyte à l'état solide ; et
une couche intermédiaire entre le NECC et le séparateur électrolyte ;
dans laquelle la couche intermédiaire comprend du zinc (Zn) ayant une épaisseur comprise entre 300 et 699 nm ; ou de l'étain (Sn) ayant une épaisseur de 300 à 350 nm ou de 350 à 399 nm.

2. La batterie au lithium de la revendication 1, dans laquelle le séparateur électrolyte est un film mince ou une pastille.

3. La batterie au lithium de n'importe quelle revendication précédente, dans laquelle la couche intermédiaire comprend en outre un composé contenant de l'oxygène.

4. La batterie au lithium de n'importe quelle revendication précédente, comprenant en outre une électrode négative en Li métallique entre et en contact direct avec le NECC et la couche intermédiaire, dans laquelle la couche intermédiaire est entre et en contact direct avec l'électrode négative en lithium métallique et le séparateur électrolyte.

5. La batterie au lithium de n'importe quelle revendication précédente, dans laquelle le séparateur électrolyte comprend un grenat chargé de lithium.

6. La batterie au lithium de la revendication 5, dans laquelle le grenat chargé de lithium comprend Li_{A}La_{B}M'_{c}M"_{D}Zr_{E}O_{F}, dans laquelle 4 < A < 8,5, 1,5 < B < 4, 0 ≤ C ≤ 2, 0 ≤ D ≤ 2 ; 0 ≤ E ≤ 2,5, 10 < F ≤ 13 ; et M' et M" sont chacun, indépendamment dans chaque cas, sélectionnés dans le groupe constitué de Al, Mo, W, Nb, Sb, Ca, Ba, Sr, Ce, Hf, Rb, Ga, et Ta ; dans laquelle le grenat chargé de lithium comprend Li_{J}la_{K}Zr_{L}O_{M}•yAl₂O₃ ; dans laquelle 5 ≤ J ≤ 8, 2 ≤ K ≤ 5, 0 ≤ L ≤ 3, 10 ≤ M ≤ 13, et 0 ≤ y ≤ 1 ; ou dans laquelle le grenat chargé de lithium comprend LiₓLa₃Zr_{z}O₁₂.yAl₂O₃, dans laquelle 5 ≤ x ≤ 8, 0 ≤ y ≤ 1, et 0 < z ≤ 2,5.

7. La batterie au lithium de n'importe laquelle des revendications 4 à 6, dans laquelle la couche intermédiaire et l'électrode négative en lithium métallique comprennent 99,9 % à 95 % de lithium en mole et 0,1 % à 5 % de zinc en mole ; ou dans laquelle la couche intermédiaire comprend en outre au moins un élément sélectionné dans le groupe constitué de AI, Au, Ag, Bi, Cr, Ge, Sb, Si, Ti, d'un alliage de lithium de ceux-ci, d'oxydes de ceux-ci, d'hydroxydes de ceux-ci, de peroxydes de ceux-ci, et de combinaisons de ceux-ci.

8. La batterie au lithium de n'importe quelle revendication précédente, dans laquelle la couche intermédiaire diminue l'angle de contact du lithium métallique liquide, quand le lithium métallique liquide est placé en contact avec la couche intermédiaire par rapport à quand le lithium métallique liquide est placé en contact avec le séparateur électrolyte.

9. La batterie au lithium de n'importe quelle revendication précédente, dans laquelle le NECC comprend un matériau sélectionné dans le groupe constitué de nickel (Ni) revêtu de carbone (C), de nickel (Ni), de cuivre (Cu), d'aluminium (AI), d'acier inoxydable, et de combinaisons de ceux-ci.

10. La batterie au lithium de n'importe quelle revendication précédente, dans laquelle le séparateur électrolyte est un film mince et l'épaisseur du film mince va de 0,1 µm à 200 µm.

11. Une cellule électrochimique comprenant une batterie au lithium de n'importe laquelle des revendications 1 à 10, dans laquelle une pression dans la cellule électrochimique est d'au moins 68,9 kPa (10 psi).

12. La cellule électrochimique de la revendication 11, dans laquelle une pression dans la cellule électrochimique est d'au moins 689 kPa (100 psi) ; ou dans laquelle une pression dans la cellule électrochimique est inférieure à 2 068 kPa (300 psi).
